# EUROPEAN PATENT APPLICATION

(11) **EP 4 640 730 A1**
(43) Date of publication of application: **29.10.2025**
(21) Application number: 25169954.2
(22) Date of filing: 11.04.2025
(51) Int. Cl.: C08G 18/20, C08G 18/40, C08G 18/48, C08G 18/63, C08G 18/76

(54) **POLYURETHANE FOAM-FORMING COMPOSITIONS AND OPENED-CELL FLEXIBLE FOAMS PRODUCED THEREFROM**

(30) Priority: 16.04.2024 US 202463634551 P
(71) Applicant: Covestro LLC, Pittsburgh, PA 15205 (US)
(72) Inventor: Pyles, David, McMurray,(PA), 15317 (US); Hayes, John, Gibsonia, 15044-6053 (US); McVey, Susan, Houston, 15342 (US); Adkins, Rick, Hurricane, 25526 (US); Walker, Jaime, Pittsburgh, 15243 (US)
(74) Representative: Levpat

(57) **Abstract**

Polyurethane foam-forming compositions and flexible polyurethane foams produced from such compositions. The flexible polyurethane foams can exhibit any of a) enhanced IFD 25% without being significantly detrimental to the airflow, b) enhanced airflow without being significantly detrimental to the IFD 25%, or c) enhanced IFD 25% and enhanced airflow. The polyurethane foam-forming composition includes a filled polyol that includes solid polymer particles and a carrier polyol that includes a polyether polyol P1 having a functionality of 2 to 6, an OH number of 20 to 120 mg KOH/g polyether polyol P1, and a poly(oxyethylene) content of at least 60% by weight, based on total weight of the polyether polyol P1, which is present in an amount of at least 50% by weight, based on total weight of carrier polyol.

## Description

### FIELD

This specification pertains generally to polyurethane foam-forming compositions and opened-cell flexible foams produced therefrom. The opened-cell flexible foams can exhibit increased firmness without significantly affecting other physical properties, such as air flow.

### BACKGROUND

Opened-cell flexible polyurethane foams are used in many applications, such as in the production of bedding products, including as mattresses and pillows, furniture, and automotive seating. They are produced by reacting an isocyanate-reactive material, usually polyol, with a polyisocyanate, in the presence of a blowing agent and usually other ingredients, such as catalyst and surfactant. Many types of opened-cell flexible foams, such as so-called "hyper-soft" foams, are produced using a relatively high amount, such as 40% or more by weight (based on total weight of polyol) of polyether polyol with a high poly(oxyethylene) content (50% or more by weight, based on total weight of the polyether polyol). The polyurethane foams resulting from such compositions can exhibit high airflow.

A drawback to such foams, however, at least in some applications, is that they tend to exhibit low firmness, which is an indicator of the surface feel of the foam and is measured by Indentation Force Deflection ("IFD"), particularly IFD 25%. Producing opened-cell flexible foams with a combination of high airflow and increased IFD can be challenging. Traditionally, this has been achieved by increasing the isocyanate index of the formulation or by incorporating a filled polyol (a dispersion of solid polymer particles in a carrier polyol) in the formulation. These methods of increasing IFD have, however, led to detrimental effects on airflow characteristics of the foam.

As a result, it would be desirable to provide flexible polyurethane foams with any of a) enhanced IFD 25% without being significantly detrimental to the airflow, b) enhanced airflow without being significantly detrimental to the IFD 25%, or c) enhanced IFD 25% and enhanced airflow. The inventions described in this specification were made in view thereof.

### SUMMARY

This specification relates to polyurethane foam-forming compositions. The polyurethane foam-forming compositions comprise: (a) a polyisocyanate; (b) a polyol composition; (c) a blowing agent composition; and (d) a catalyst. The polyisocyanate is present in an amount sufficient to provide an isocyanate index of 70 to 130 wherein the isocyanate index is the molar ratio of isocyanate groups to hydroxyl groups present in the polyurethane foam-forming composition, multiplied by 100. The blowing agent composition comprises water. The polyol composition has a weight average hydroxyl functionality of 2 to 4 and a weight average OH number of 20 to 120 mg KOH/g polyol composition as determined according to ASTM D4274-16. In addition, the polyol composition comprises a filled polyol comprising: (i) solid polymer particles having an average particle size of no more than 1.5 microns, as determined by ASTM 9121-18; and (ii) a carrier polyol comprising a polyether polyol P1 having a functionality of 2 to 6, an OH number of 20 to 120 mg KOH/g polyether polyol P1 as determined according to ASTM D4274-16, and a poly(oxyethylene) content of at least 60% by weight, based on total weight of the polyether polyol P1, in which polyether polyol P1 is present in an amount of at least 50% by weight, based on total weight of carrier polyol. Further, the filled polyol is present in an amount of at least 5% by weight, based on total weight of polyol in the polyurethane foam-forming composition.

Other aspects of this specification relate, for example, to opened-cell flexible polyurethane foams produced from such compositions, methods of making opened-cell flexible polyurethane foams, and articles of manufacture, such as bedding products (including mattresses and pillows), furniture, and automotive seating, that include such foams.

### DETAILED DESCRIPTION

Various implementations are described and illustrated in this specification to provide an overall understanding of the structure, function, properties, and use of the disclosed inventions. It is understood that the various implementations described and illustrated in this specification are non-limiting and non-exhaustive. Thus, the invention is not limited by the description of the various non-limiting and non-exhaustive implementations disclosed in this specification. The features and characteristics described in connection with various implementations may be combined with the features and characteristics of other implementations. Such modifications and variations are intended to be included within the scope of this specification. As such, the claims may be amended to recite any features or characteristics expressly or inherently described in, or otherwise expressly or inherently supported by, this specification. Further, Applicant(s) reserve the right to amend the claims to affirmatively disclaim features or characteristics that may be present in the prior art. The various implementations disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant(s) reserves the right to amend this specification to expressly recite any subject matter, or portion thereof, incorporated by reference herein.

Each numerical parameter described in this specification should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described implementations. Further, the use of a singular noun includes the plural, and the use of a plural noun includes the singular, unless the context of the usage requires otherwise.

As used herein, the term "functionality" refers to the average number of reactive hydroxyl groups, -OH, present per molecule of the -OH functional material being described. The term "hydroxyl number", as used herein, refers to the number of reactive hydroxyl groups available for reaction, and is expressed as the number of milligrams of potassium hydroxide equivalent to the hydroxyl content of one gram of the polyol, measured according to ASTM D4274-16. The term "equivalent weight" refers to the weight of a compound divided by its valence. For a polyol, the equivalent weight is the weight of the polyol that will combine with an isocyanate group, and may be calculated by dividing the molecular weight of the polyol by its functionality. The equivalent weight of a polyol may also be calculated by dividing 56,100 by the hydroxyl number of the polyol - Equivalent Weight (g/eq) = (56.1 x 1000)/OH number.

The inventions of this specification relate to the production of flexible foams. The term "flexible foam", as used herein, refers to foams that have a ratio of tensile strength to compressive strength (25% deflection) of at least 15:1, such as 15 to 70:1, or, in some cases 15 to 60:1, as set forth in "Polyurethanes: Chemistry and Technology, Part II Technology," J. H. Saunders & K. C. Frisch, Interscience Publishers, 1964, page 117. In addition, in some implementations, the flexible foam also has a % elongation of at least 100%, such as at least 130%, at least 150%, or, in some cases at least 200%. Moreover, in some implementations, the flexible foams produced according to the methods of this specification have a CFD 65% compression force deflection of 1.5 to 10 psi , such as 1.5 to 8 psi, or, in some cases, 1.5 to 6 psi (1 psi = 0.0703 N/cm²). All of the foregoing property testing of flexible foams for purposes of the present invention is done in accordance with ASTM D3574-11. By contrast, as will be appreciated, a rigid foam is characterized as having a ratio of compressive strength to tensile strength of at least 0.5:1, elongation of less than 10%, as well as a low recovery rate from distortion and a low elastic limit, as described in "Polyurethanes: Chemistry and Technology, Part II Technology," J. H. Saunders & K. C. Frisch, Interscience Publishers, 1964, page 239.

More specifically, in some implementations, the flexible foams of this specification are "hyper-soft" foams. As used herein, a "hyper-soft" foam is a foam that exhibits an IFD of no more than 35 lb/50in² (159 N/323 cm²) and an airflow of at least 6 ft³/min (2.8 L/sec), each measured according to ASTM D3574-17. In some implementations, the flexible foams of this specification are "viscoelastic" foams. As used herein, a "viscoelastic" foam is a foam that exhibits a recovery rate of at least 3 seconds, wherein "recovery rate" refers to the 95% height recovery time as described in ASTM D 3571-11 Test M. In other embodiments, the foam may exhibit a recovery rate of less than 3 seconds, which indicates a fast recovering foam, such as is observed for "resilient" foams.

The flexible foams of this specification, in some implementations, have a density, measured according to ASTM D1622-14, of no more than 4 lb/ft³ (no more than 64 kg/m³), such as 1 to 4 lb/ft³ (16 to 64 kg/m³), 1 to 3 lb/ft³ (16 to 48 kg/m³), or 1.5 to 2.5 lb/ft³ (24 to 40 kg/m³).

As indicated, some implementations of this specification relate to polyurethane foam-forming compositions that comprise a polyisocyanate. As used herein, the term "polyisocyanate" encompasses diisocyanates as well as higher functionality polyisocyanates.

Any known organic isocyanate, modified isocyanate or isocyanate-terminated prepolymer made from any known organic isocyanate may be used. Suitable organic isocyanates include aromatic, aliphatic, and cycloaliphatic polyisocyanates. Useful polyisocyanates include: diisocyanates, such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,3-cyclohexane diisocyanate, 1,4-cyclo-hexane diisocyanate, isomers of hexahydro-toluene diisocyanate, isophorone diisocyanate, dicyclo-hexylmethane diisocyanate, 1,5-naphthylene diisocyanate, 4,4-diphenylmethane diisocyanate, 2,4'-diphenylmethane diisocyanate, 4,4'-biphenylene diisocyanate, 3,3'-dimethoxy-4,4'-biphenylene diisocyanate and 3,3'-dimethyl-diphenyl propane-4,4'-diisocyanate; triisocyanates, such as 2,4,6-toluene triisocyanate; and higher functionality polyisocyanates, such as 4,4'-dimethyl-diphenylmethane 2,2',5,5'-tetraisocyanate and polymethylene polyphenyl-polyisocyanates.

Undistilled or crude polyisocyanates may also be used. Crude toluene diisocyanate obtained by phosgenating a mixture of toluene diamines and the crude diphenylmethane diisocyanate obtained by phosgenating crude diphenylmethanediamine (polymeric MDI) are examples of suitable crude polyisocyanates.

Modified polyisocyanates may also be used. Useful modified polyisocyanates include, but are not limited to, those containing ester groups, urea groups, biuret groups, allophanate groups, carbodiimide groups, isocyanurate groups, uretdione groups and/or urethane groups. Examples of modified polyisocyanates include prepolymers containing NCO groups and having an NCO content of 25 to 35 weight percent, such as 29 to 34 weight percent (according to method MDI-01-01), and/or an isocyanate functionality of 2.2 to 3.2, such as 3.0 to 3.2 such as those based on a polyether polyol or polyester polyol and diphenylmethane diisocyanate.

In certain implementations, the polyisocyanate comprises a mixture of 2,4- and 2,6-toluene diisocyanate, such as a mixture of 79.5 to 81.5 weight percent 2,4-toluene diisocyanate and 18.5 to 20.5 weight percent of 2,6-toluene diisocyanate.

In the foam-forming compositions of this specification, the polyisocyanate is present in an amount sufficient to provide an isocyanate index of 70 to 130, such as 80 to 120, 90 to 110, or, in some cases, 95 to 100. As will be appreciated by the ordinarily skilled artisan, "isocyanate index" refers to the molar ratio of isocyanate groups to hydroxyl groups present in the foam-forming composition, multiplied by 100.

The foam-forming compositions of this specification also include a polyol composition. More particularly, the polyol composition has a weight average hydroxyl functionality of 2 to 4, 2.5 to 3.5, or, in some cases, 2.5 to 3. In addition, the polyol composition has weight average a weight average OH number of 20 to 120 mg KOH/g polyol composition, such as 20 to 100 mg KOH/g polyol composition, 20 to 80 mg KOH/g polyol composition, or, in some cases, 40 to 80 mg KOH/g polyol composition. Also, in some implementations, the polyol composition has a poly(oxyethylene) content of at least 15% by weight, at least 35% by weight, such as 40 to 80% by weight, 40 to 60% by weight, or, in some cases 50 to 60% by weight, based on the total weight of polyol in the polyurethane foam-forming composition.

In addition, the polyol composition comprises a filled polyol. As used herein, the term "filled polyol" refers to a dispersion of solid polymer particles in a liquid carrier polyol (sometimes referred to as a "base" polyol). In some embodiments, the filled polyol has a solids content, *i.e.,* content of solid polymer particles, of 20% by weight to 75% by weight, such as 20% by weight to 70% by weight, 20% by weight to 60% by weight, or 20% by weight to 40% by weight, based on the total weight of the filled polyol. Moreover, in certain implementations, the filled polyol has a viscosity (in in millipascal-seconds (mPa.s) measured at 25°C on an Anton Paar SVM3000 viscometer) of less than 50,000 mPa.s, such as less than 40,000 mPa.s, less than 30,000 mPa+s, less than 20,000 mPa+s or, in some cases, less than 10,000 mPa.s.

The solid polymer particles have an average particle size of no more than 1.5 microns, such as 0.1 to 1.5 microns, 0.2 to 1.4 microns, or 0.5 to 1.0 microns, as determined by ASTM 9121-18 (1 micron = 0.001 mm). In addition, in some implementations, the filled polyol present in the polyurethane foam-forming compositions of this specification exhibit a multimodal particle size distribution. As used herein, "multimodal particle size distribution" refers to a situation in which a distribution curve of the polymer particle sizes of the filled polyol has at least two maxima. The two peaks of the curve may be of similar or different size, as measured by the particle distribution volume fraction. In some cases, the solid polymer particles of the filled polyol have a particle size distribution curve (as measured by the particle distribution volume fraction) having two or more peaks in which the first peak is at a mean particle size of no more than 1 micron, such as at a particle size of 0.1 to 1 micron, 0.2 to 0.8 micron, or, 0.3 to 0.7 micron, and the second peak is at a mean particle size of more than 1 micron, such as more than 1 to 5 micron.

Specific examples of suitable filled polyols include polyisocyanate polyaddition ("PIPA") polyols, polyurea and/or polyhydrazodicarbonamide ("PHD") polyols, and polymer polyols ("PMPOs"). PHD polyols can be produced by in-situ polymerization of an isocyanate or an isocyanate mixture with a diamine and/or hydrazine (or hydrazine hydrate) in a polyol, such as a polyether polyol, such as by the reaction of an isocyanate mixture of 75% to 85% by weight of 2,4-tolylene diisocyanate (2,4-TDI) and 15% to 25% by weight of 2,6-tolylene diisocyanate (2,6-TDI) with a diamine and/or hydrazine hydrate in a polyether polyol produced by alkoxylation of a trifunctional starter (for example glycerol and/or trimethylolpropane). Processes for producing PHD dispersions are described for example in U.S. Pat. Nos. 4,089,835 and 4,260,530, which are incorporated herein by reference. PIPA polyols are polyether polyols modified with alkanolamines by polyisocyanate polyaddition, where the polyether polyol has a functionality of 2.5 to 4.0 and a hydroxyl number of 3 mg KOH/g to 112 mg KOH/g. PIPA polyols are described in detail in GB 2 072 204 A, DE 31 03 757 A1 and U.S. Pat. No. 4,374,209 A, which are incorporated herein by reference.

In some implementations, however, the filled polyol comprises a PMPO. More specifically, in these implementations, the solid polymer particles of the filled polyol comprise a polymer comprising the free radical polymerization reaction product of an ethylenically unsaturated monomer. In some of these embodiments, the filled polyol comprises a reaction product of a reaction mixture comprising: (a) a carrier polyol; (b) an ethylenically unsaturated monomer, (c) a preformed stabilizer, (d) a free radical initiator, and, (e) optionally, a polymer control agent. As used herein, "monomer" means the simple unpolymerized form of a chemical compound having relatively low molecular weight, e.g., acrylonitrile, styrene, methyl methacrylate, and the like. As used herein, "polymerizable ethylenically unsaturated monomer" means a monomer containing ethylenic unsaturation (C=C, i.e., two double bonded carbon atoms) that is capable of undergoing free radically induced addition polymerization reactions. As used herein, "preformed stabilizer" means an intermediate obtained by reacting a macromer containing reactive unsaturation (e.g. acrylate, methacrylate, maleate, etc.) with one or more monomers (i.e. acrylonitrile, styrene, methyl methacrylate, etc.), with and at least one free radical initiator, in the presence of a polymer control agent (PCA) and, optionally, in a diluent.

In the filled polyols utilized in the polyurethane foam-forming compositions of this specification, the carrier polyol comprises a polyether polyol P1 having a functionality of 2 to 6, an OH number of 20 to 120 mg KOH/g polyether polyol P1, and a poly(oxyethylene) content of at least 60% by weight, based on the total weight of the polyether polyol P1. More specifically, in some implementations, such carrier polyol has a functionality of 2 to 4, 2.5 to 3.5, or, in some cases, 2.8 to 3.2. In addition, in some implementations, such carrier polyol comprises a polyether polyol having an OH number of 20 to 100 mg KOH/g polyether polyol P1, 20 to 50 mg KOH/g polyether polyol P1, 25 to 50 mg KOH/g polyether polyol P1, or 30 to 50 mg KOH/g polyether polyol P1. Also, in some implementations, such carrier polyol has a poly(oxyethylene) content of 60% to 90% by weight, 60 to 80% by weight, or 65 to 75% by weight, based on the total weight of the polyether polyol P1.

Specific examples of suitable such polyether polyols P1 include alkylene oxide addition products of starter compounds with Zerewitinoff-active hydrogen atoms. Suitable starter compounds with Zerewitinoff-active hydrogen atoms which are used for the production of such polyether polyols P1 often have a hydroxyl functionality of 2 to 6, 2 to 4, or, in some cases, 3. Specific examples of suitable hydroxy-functional starter compounds are propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, triethanolamine, pentaerythritol, sorbitol, sucrose, hydro-quinone, pyrocatechol, resorcinol, bisphenol F, bisphenol A, 1,3,5-trihydroxybenzene, and condensation products of formaldehyde and phenol or melamine or urea which contain methylol groups. Specific examples of alkylene oxides suitable for preparing such polyether polyols P1 include ethylene oxide ("EO"), propylene oxide ("PO"), 1,2-butylene-oxide or 2,3-butylene oxide and styrene oxide. In some cases, propylene oxide and ethylene oxide are introduced into the reaction mixture individually, in a mixture or successively. If the alkylene oxides are metered in successively, the resulting products contain polyether chains with block structures. Products with ethylene oxide blocks are characterized by increased concentrations of primary end groups. The alkoxylation reaction may be catalyzed using any conventional catalyst including, for example, potassium hydroxide (KOH) or a double metal cyanide (DMC) catalyst.

In the filled polyol used in the polyurethane foam-forming compositions of this specification, the foregoing polyether polyol P1 is present in an amount of at least 50% by weight, such as at least 70% by weight, at least 80% by weight, or at least 90% by weight, based on the total weight of carrier polyol. In some implementations, the foregoing polyether polyol P1 is the only carrier polyol used in the filled polyol.

As will be appreciated, however, the filled polyol may, if desired, include other carrier polyols different from the polyether polyol P1 described above. Suitable additional carrier polyols include, for example, other polyether polyols having a functionality of 2 to 8, 2 to 6, or 3 to 6, and an OH number of 20 to 400 mg KOH/g, 20 to 200 mg KOH/g, 20 to 150 mg KOH/g, 20 to 100 mg KOH/g, 20 to 50 mg KOH/g, 25 to 50 mg KOH/g, or 30 to 50 mg KOH/g.

As indicated, in some implementations, the filled polyol comprises a polymer polyol in which the solid polymer particles are the reaction product of a reaction mixture comprising, in addition to the carrier polyol, an ethylenically unsaturated monomer, a preformed stabilizer, a free radical initiator, and optionally a polymer control agent.

Suitable ethylenically unsaturated monomers for use in the reaction mixture to produce the polymer polyol include, for example, aliphatic conjugated dienes, such as butadiene and isoprene, monovinylidene aromatic monomers, such as styrene, α-methyl-styrene, (t-butyl)styrene, chlorostyrene, cyanostyrene and bromostyrene; α,β-ethylenically unsaturated carboxylic acids and esters thereof, such as acrylic acid, methacrylic acid, methyl methacrylate, ethyl acrylate, 2-hydroxyethyl acrylate, butyl actylate, itaconic acid, and maleic anhydride, α,β-ethylenically unsaturated nitriles and amides, such as acrylonitrile, methacrylonitrile, acrylamide, methacrylamide, N,N-dimethyl acrylamide, and N-(dimethylaminomethyl)-acrylamide, vinyl esters, such as vinyl acetate, vinyl ethers, vinyl ketones, and vinyl and vinylidene halides, among others. Of course, mixtures of two or more of the aforementioned monomers are also suitable. In some embodiments, the ethylenically unsaturated monomer comprises at least one of styrene and its derivatives, acrylonitrile, methyl acrylate, methyl methacrylate, and vinylidene chloride.

Preferably, the ethylenically unsaturated monomer comprises styrene and acrylonitrile. More specifically, in some implementations, styrene and acrylonitrile are used in sufficient amounts such that the weight ratio of styrene to acrylonitrile (S:AN) is within the range of 80:20 to 20:80, such as 75:25 to 25:75, 60:40 to 40:60, or 40:60 to 50:50.

In some implementations, the preformed stabilizer used to produce the polymer polyol comprises the reaction product of a reaction mixture comprising: (a) a macromer that contains reactive unsaturation, (b) an ethylenically unsaturated monomer, (c) a free radical initiator, (d) a polymer control agent; and, in some cases, (e) a diluent.

In some implementations, the macromer utilized to produce the preformed stabilizer comprises the reaction product of a reaction mixture comprising: (i) an H-functional starter having a functionality of 2 to 8 and a hydroxyl number of 20 to 50; (ii) 0.1 to 3% by weight, based on 100% by weight of the sum of components (i), (ii) and (iii), of a hydroxyl-reactive compound that contains reactive unsaturation; and (iii) 0 to 3% by weight, such as 0.05 to 2.5% by weight, or 0.1 to 1.5% by weight, based on 100% by weight of the sum of components (i), (ii) and (iii), of a diisocyanate.

Suitable preformed stabilizers can be prepared by reacting a combination of components (a), (b), (c) and (d), and optionally, (e), as described above, in a reaction zone maintained at a temperature sufficient to initiate a free radical reaction, and under sufficient pressure to maintain only liquid phases in the reaction zone, for a sufficient period of time to react (a), (b) and (c); and recovering a mixture containing the preformed stabilizer dispersed in the polymer control agent.

Suitable starters for use in preparing the macromer include compounds having a hydroxyl functionality of 2 to 8, such as 3 to 6, and a hydroxyl number of 20 to 50, such as 25 to 40. A specific example of a suitable starter is an alkylene oxide adduct of a hydroxyl functional compound, such as ethylene glycol, propylene glycol, diethylene glycol, dipropylene glycol, tripropylene glycol, glycerin, trimethylolpropane, pentaerythritol, sorbitol, ethylenediamine, and toluene diamine, among others, including mixtures of any two or more thereof, in which the alkylene oxide comprises, for example, propylene oxide, ethylene oxide, butylene oxide, or styrene oxide, among others, including mixtures of any two or more thereof, such as a mixture of propylene oxide and ethylene oxide. Such mixtures may be added simultaneously (*i.e.* two or more alkylene oxide are added as co-feeds), or sequentially (one alkylene oxide is added first, and then another alkylene oxide is added), or a combination of simultaneously and sequentially. In one embodiment, an alkylene oxide, such as propylene oxide, may be added first, and then a second alkylene oxide, such as ethylene oxide, added as a cap.

Other examples of suitable starters for preparing the macromer are polyoxyethylene glycols, triols, tetrols and higher functionality polyols, and mixtures thereof, as well as alkylene oxide adducts of non-reducing sugars and sugar derivatives, alkylene oxide adducts of phosphorus and polyphosphorus acids, alkylene oxide adducts of polyphenols, polyols prepared from natural oils such as castor oil and alkylene oxide adducts of polyhydroxyalkanes other than those described above. Illustrative alkylene oxide adducts of polyhydroxyalkanes include, alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-, 1,4- 1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, and mannitol. Specific examples of alkylene oxide adducts of non-reducing sugars are those where the alkoxides have from 2 to 4 carbon atoms. Non-reducing sugars and sugar derivatives include sucrose, alkyl glycosides, such as methyl glycoside and ethyl glucoside, glycol glucosides, such as ethylene glycol, glycoside, propylene glycol glucoside, glycerol glucoside, and 1,2,6-hexanetriol glucoside, and alkylene oxide adducts of the alkyl glycosides. Other suitable polyols starters for preparing the macromer include polyphenols, such as alkylene oxide adducts thereof, wherein the alkylene oxides have from 2 to 4 carbon atoms. Suitable polyphenols include, for example bisphenol A, bisphenol F, condensation products of phenol and formaldehyde, the novolac resins, condensation products of various phenolic compounds and acrolein, including the 1,1,3-tris(hydroxy-phenyl)propanes, condensation products of various phenolic compounds and glyoxal, glutaraldehyde, other dialdehydes, including the 1,1,2,2-tetrakis (hydroxyphenol)ethanes.

In some implementations, the starter used to prepare the macromer has a functionality of from 3 to 6 and a hydroxyl number of from 25 to 40 mg KOH/g starter, and is prepared by reacting a starter, such as glycerin, trimethylolpropane, pentaerythritol, dipentaerythritol, sorbitol, mannitol, or a mixture of any two or more thereof, with an alkylene oxide comprising at least one of propylene oxide and/or ethylene oxide. In some of these embodiments, ethylene oxide is utilized in an amount of 1 to 40% by weight, such as 5 to 30% by weight or 10 to 25% by weight, based on the total weight of the starter compound. The ethylene oxide can be added as an internal block, as a random cofeed with another oxide, or as a terminal block (i.e. a "cap"). In some embodiments, all or a portion of the ethylene oxide is added as a cap on the end of the starter compound. Suitable amounts of ethylene oxide to be added as a cap range from, for example, 1 to 40% by weight, such as 3 to 30% by weight or 5 to 25% by weight, based on the total weight of starter.

As indicated earlier, in some implementations, the reaction mixture used to produce the macromer utilized to produce the preformed stabilizer also comprises a hydroxyl-reactive compound that contains reactive unsaturation. Suitable such compounds include, for example, methyl methacrylate, ethyl methacrylate, maleic anhydride, isopropenyl dimethyl benzyl isocyanate, 2-isocyanatoethyl methacrylate, adducts of isophorone diisocyanate and 2-hydroxyethyl methacrylate, and adducts of toluenediisocyanate and 2-hydroxypropyl acrylate, among others, including mixtures of any two or more thereof.

As also indicated earlier, in some implementations, the reaction mixture used to produce the macromer utilized to produce the preformed stabilizer may also comprise a diisocyanate. Suitable diisocyanates include various isomers of diphenylmethane diisocyanate and isomeric mixtures of diphenylmethane diisocyanate, such as, for example, mixtures of 2,4'-diphenylmethane diisocyanate, 4,4'-diphenylmethane diisocyanate and/or 2,2'-diphenyl-methane diisocyanate. Other suitable isocyanates include toluenediisocyanate, isophoronediisocyanate, hexamethylenediisocyanate, and 4,4'-methylenebis(cyclohexyl isocyanate), among others, includes mixtures of any two or more thereof.

In certain implementations, the macromer is used in an amount of 10 to 40% by weight, such as 15 to 35% by weight, based on the total weight of the reaction mixture used to produce the preformed stabilizer.

As previously mentioned, in some implementations, the reaction mixture used to form the preformed stabilizer used to produce the polymer polyol also comprises an ethylenically unsaturated monomer. Suitable such ethylenically unsaturated monomers are aliphatic conjugated dienes, such as butadiene and isoprene, monovinylidene aromatic monomers such as styrene, α-methylstyrene, (t-butyl)styrene, chlorostyrene, cyanostyrene and bromostyrene, α,β-ethylenically unsaturated carboxylic acids and esters thereof, such as acrylic acid, methacrylic acid, methyl methacrylate, ethyl acrylate, 2-hydroxyethyl acrylate, butyl acrylate, itaconic acid, maleic anhydride and the like, α,β-ethylenically unsaturated nitriles and amides, such as acrylonitrile, methacrylonitrile, acrylamide, methacrylamide, N,N-dimethyl acrylamide, N-dimethylaminomethyl)acryl-amide and the like, vinyl esters, such as vinyl acetate; vinyl ethers, vinyl ketones, vinyl and vinylidene halides, as well as a wide variety of other ethylenically unsaturated materials which are copolymerizable with the macromer, including mixture of any two or more thereof.

In some implementations, the ethylenically unsaturated monomer present in the reaction mixture used to form the preformed stabilizer comprises a mixture of acrylonitrile and at least one other ethylenically unsaturated comonomer which is copolymerizable with acrylonitrile, such as, for example, styrene and its derivatives, acrylates, methacrylates, such as methyl methacrylate, vinylidene chloride, among others, as well as mixtures of any two or more thereof. When using acrylonitrile with a comonomer, it is sometimes desirable that a minimum of 5 to 15% by weight acrylonitrile be maintained in the system. One specific ethylenically unsaturated monomer mixture suitable for making the preformed stabilizer comprises a mixture of acrylonitrile and styrene in which, for example, acrylonitrile is used in an amount of 20 to 80% by weight, such as 30 to 70% by weight, based on the total weight of the monomer mixture, and styrene is used in an amount of 80 to 20% by weight, such as 70 to 30% by weight percent, based on the total weight of the monomer mixture.

In certain implementations, the ethylenically unsaturated monomer is used in an amount of 10 to 30% by weight, such as 15 to 25% by weight, based on the total weight of the reaction mixture used to produce the preformed stabilizer.

The reaction mixture used to produce the preformed stabilizer, in certain implementations, also includes a free radical initiator. Suitable free-radical initiators include peroxides, including both alkyl and aryl hydro-peroxides, persulfates, perborates, percarbonates, and azo compounds. Some specific examples include hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), and 2,2'-azo bis-(2-methylbutyronitrile). Representative examples of useful initiators species include t-butyl peroxy-2-ethyl-hexanoate, t-butylperpivalate, t-amyl peroctoate, 2,5-dimethyl-hexane-2,5-di-per-2-ethyl hexoate, t-butylperneodecanoate, and t-butylperbenzoate, as well as azo compounds, such as azobis-isobutyronitrile, 2,2'-azo bis-(2-methylbutyro-nitrile), and mixtures thereof.

In some implementations, the free radical initiator is used in an amount of 0.01 to 2% by weight, such as 0.05 to 1% by weight or 0.05 to 0.3% by weight, based on the total weight of the reaction mixture used to produce the preformed stabilizer.

The reaction mixture used to produce the preformed stabilizer, in some implementations, also includes a polymer control agent, such as various mono-ols (i.e. monohydroxy alcohols), aromatic hydrocarbons, and ethers. Specific examples of suitable polymer control agents are alcohols containing at least one carbon atom, such as methanol, ethanol, n-propanol, isopropanol, n-butanol, sec.-butanol, t-butanol, n-pentanol, 2-pentanol, 3-pentanol, and the like, and mixtures of any two or more thereof. Other suitable polymer control agents are ethylbenzene and toluene.

In certain implementations, the polymer control agent is used in an amount of 30 to 80% by weight or 40 to 70% by weight, based on the total weight of the reaction mixture used to produce the preformed stabilizer.

As previously indicated, the reaction mixture used to produce the preformed stabilizer may also include a diluent, such as alkylene oxide adducts having a hydroxyl functionality of greater 2. In some implementations, the diluent is the same as or similar to the polyol used in the formation of precursor used to prepare the preformed stabilizer. In certain implementations, the diluent is used in an amount of 0 to 40% by weight, such as 0 to 20% by weight, or, in some cases, 0 to 10% by weight, based on the total weight of the reaction mixture used to produce the preformed stabilizer.

The preformed stabilizer can be produced by a process similar to that of making the polymer polyol. The temperature range is not critical and may vary from, for example, 80°C to 150°C, such as 115°C to 125°C. The mixing conditions employed can, for example, be those obtained using a back mixed reactor.

As indicated earlier, the reaction mixture used to produce certain implementations of the polymer polyol also comprises a free radical initiator. Suitable such free-radical initiators include, for example, any of those described previously with respect to the production of the preformed stabilizer. In certain implementations, the free-radical initiator is present in the reaction mixture used to produce the polymer polyol in an amount of 0.01 to 2% by weight, based on 100% by weight of the polymer polyol.

In some implementations, the reaction mixture used in preparing the polymer polyol further comprises a chain transfer agent. Examples of suitable chain transfer agents are mercaptans, such as dodecane thiol, ethane thiol, octane thiol, and toluene thiol, halogenated hydrocarbons, such as carbon tetrachloride, carbon tetrabromide, and chloroform, amines, such as diethylamine, and enol-ethers. In some embodiments, if used, the chain transfer agent is used in an amount of 0.1 to 2% by weight, such as 0.2 to 1% by weight, based on the total weight of the reaction mixture used to produce the polymer polyol.

The reaction mixture used in preparing the polymer polyol, in some implementations, also includes a polymer control agent, such as various mono-ols (i.e. monohydroxy alcohols), aromatic hydrocarbons, and ethers. Specific examples of suitable polymer control agents are alcohols containing at least one carbon atom, such as methanol, ethanol, n-propanol, isopropanol, n-butanol, sec.-butanol, t-butanol, n-pentanol, 2-pentanol, 3-pentanol, and the like, and mixtures of any two or more thereof. Other suitable polymer control agents are ethylbenzene and toluene.

The foregoing polymer polyol compositions can be made using any process and reactor configuration that is known to be suitable to prepare filled polyols, such as that which is described in U.S. Patent Application Publication No. US 2017/0306076 A1 at [0139]-[0144] and [0146], the cited portions of which being incorporated herein by reference.

In the polyurethane foam-forming compositions of this specification, the filled polyol is present in an amount of at least 5% by weight, such as at least 10% by weight, 10 to 90% by weight, or, in some cases, 10 to 50% by weight, based on total weight of polyol in the polyurethane foam-forming composition. In some implementations, the filled polyol is present in an amount such that solid polymer particles are present in an amount of at least 1% by weight, such as 1 to 20% by weight, or 5 to 20% by weight, based on total weight of polyol in the polyurethane foam-forming composition.

The polyol composition may include other polyols besides the previously described filled polyol. For example, in some implementations, the polyol composition may also include a polyether polyol P2 having a functionality of greater than 2, such as greater than 2 up to 6, such as 3 to 6, 3 to 5, 3 to 4, or 3; a poly(oxyethylene) content of 0 to 50 wt. %, such as 1 to 25 wt % or 10 to 30 wt %; more than 50 mol %, such as 80 to 90 mole %, of primary OH groups; and an OH number of 8 to 112 mg KOH/g polyether polyol P2, such as 20 to 50 mg KOH/g polyether polyol P2 or 25 to 35 mg KOH/g polyether polyol P2.

Suitable such polyether polyols P2 include alkylene oxide addition products of starter compounds with Zerewitinoff-active hydrogen atoms. Suitable such starter compounds often have a hydroxyl functionality of 2 to 6, in some cases 3. Specific examples of suitable hydroxy-functional starter compounds are propylene glycol, ethylene glycol, diethylene glycol, dipropylene glycol, 1,2-butanediol, 1,3-butanediol, 1,4-butanediol, hexanediol, pentanediol, 3-methyl-1,5-pentanediol, 1,12-dodecanediol, glycerol, trimethylolpropane, triethanolamine, pentaerythritol, sorbitol, sucrose, hydro-quinone, pyrocatechol, resorcinol, bisphenol F, bisphenol A, 1,3,5-trihydroxybenzene, and condensation products of formaldehyde and phenol or melamine or urea which contain methylol groups.

Specific examples of alkylene oxides suitable for preparing such polyether polyols P2 include ethylene oxide, propylene oxide, 1,2-butylene-oxide or 2,3-butylene oxide and styrene oxide. In some cases, propylene oxide and ethylene oxide are introduced into the reaction mixture individually, in a mixture or successively. If the alkylene oxides are metered in successively, the resulting products contain polyether chains with block structures. Products with ethylene oxide blocks are characterized by increased concentrations of primary end groups.

In some implementations, the foregoing polyether polyol P2 having a functionality of greater than 2, a poly(oxyethylene) content of 0 to 50 wt. %, more than 50 mol % of primary OH groups, and an OH number of 8 to 112 mg KOH/g polyether polyol P2 is present in an amount of up to 50% by weight, such as 1 to 50% by weight, 10 to 50% by weight, or, in some cases, 10 to 30% by weight, based on the total weight of polyol present in the polyurethane foam-forming composition.

In some implementations, the foregoing polyether polyol P2 having a functionality of greater than 2, a poly(oxyethylene) content of 0 to 50 wt. %, more than 50 mol % of primary OH groups, and an OH number of 8 to 112 mg KOH/g polyether polyol P2 is present as a carrier polyol for a filled polyol, such as a PMPO. Such a filled polyol, or PMPO, is of course therefore a different filled polyol, or PMPO, than the filled polyol and PMPOs described earlier in this specification.

In addition, in some implementations, the polyol composition may comprise a polyether polyol P3, introduced to the composition separately from the filled polyol, *i.e.,* not a component of a filled polyol, with a functionality of 2 to 6, such as 3, a poly(oxyethylene) content of at least 60% by weight or at least 70% by weight; at least 50 mol %, such as 50 to 60 mole %, of primary OH groups; and a hydroxyl number of 10 to 112 mg KOH/g polyether polyol P3, such as 30 to 50 mg KOH/g polyether polyol P3. Such polyether polyols P3 can include alkylene oxide addition products of starter compounds as described earlier with respect to polyether polyol P1. In some implementations, such polyether polyol P3 is present in an amount of at least 5% by weight, such as at least 10% by weight, 10 to 90% by weight, or, in some cases, 10 to 50% by weight, based on total weight of polyol in the polyurethane foam-forming composition..

In addition, in some implementations, the foam-forming compositions of this specification may include a compound, different from any of the polyols described above, with at least two isocyanate-reactive hydrogen atoms and with a molecular weight from 62 to 399. Examples of such suitable compounds include, but are not limited to, ethylene glycol, propylene glycol-(1,2) and -(1,3), butylene glycol-(1,4) and -(2,3), pentanediol-(1,5), hexanediol-(1,6), octanediol-(1,8), neopentylglycol, 1,4-bis-hydroxymethyl-cyclohexane, 2-methyl-1,3-propanediol, dibromobutenediol, glycerol, trimethylolpropane, hexanetriol-(1,2,6), trimethylolethane, pentaerythritol, quinitol, mannitol, sorbitol, castor oil, diethylene glycol, triethylene glycol, tetraethyleneglycol, higher polyethylene glycols having a molecular weight of up to 399, dipropylene glycol, higher polypropylene glycols having a molecular weight of up to 399, dibutylene glycol, higher polybutylene glycols having a molecular weight of up to 399, 4,4'-dihydroxy-diphenylpropane, dihydroxymethyl-hydroquinone, ethanolamine, diethanolamine, N-methyl-diethanolamine, triethanolamine and 3-aminopropanol.

In some implementations, however, the polyol composition comprises no more than 10% by weight, no more than 5% by weight, no more than 2% by weight, or, in some cases, no more than 1% by weight, based on the total weight of polyol, of a polyol P4 having an OH number greater than 120 mg KOH/g polyol P4.

In some implementations, the total amount of polyol included in the foam-forming reaction mixture is such that polyisocyanate and polyol are mixed at an isocyanate index of 50 to 150, 70 to 130, such as 60 to 105, 65 to 95, or 85 to 95.

It was observed, surprisingly, that use of the filled polyol described above, in the amounts described, at least in certain polyurethane foam-forming compositions requiring a high poly(oxyethylene) content (as described above) as well as certain viscoelastic foam-forming composition, could produce flexible polyurethane foams with any of a) enhanced IFD 25% without being significantly detrimental to the airflow, b) enhanced airflow without being significantly detrimental to the IFD 25%, or c) enhanced IFD 25% and enhanced airflow.

As indicated earlier, the inventions of this specification also comprise a blowing agent. Suitable blowing agents include chemical blowing agents, *i.e.,* isocyanate reactive agents that generate blowing gases, such as is the case with water and formic acid, as well as physical blowing agents, such as acetone, methylene chloride, carbon dioxide, chlorofluorocarbons ("CFCs"), highly fluorinated and/or perfluorinated hydrocarbons, chlorinated hydrocarbons, hydrofluoroolefins ("HFOs"), such as hydrofluorochloroolefins, hydrocarbons such as propane, butane, pentane, and hexane, and acetals such as methylal.

The amount of blowing agent or blowing agent mixture used may range from 0.5 to 20% by weight, based on total weight of the isocyanate-reactive component. In some instances, the amount of blowing agent may be at least 0.5% or at least 0.75% by weight, based on 100% by weight of the isocyanate-reactive component. The amount of blowing agent present may also be 20% or less, or 10% by weight or less, based on 100% by weight of the isocyanate-reactive component.

When water is the blowing agent, the amount of water is often present in an amount of 0.5 to 10% by weight, based on total weight of the isocyanate-reactive component. In some instances, the amount of water may be at least 0.5% or at least 0.75% by weight, based on total weight of the isocyanate-reactive component. The amount of water present as a blowing agent may also be 10% or less, or 7% by weight or less, based on total weight of the isocyanate-reactive component.

In some implementations, water may be used along with pressurized carbon dioxide that is dispersed in the polyol or resin blend and frothed by passing through a pressure let down device such as employed for example in the Henecke Novaflex, CarDio (Cannon Viking Limited) and Beamech (CO-2) machines. In some implementations, water is essentially the sole blowing agent employed and, as a result, in these implementations, the polyurethane foam-forming composition is substantially free of physical blowing agents, such as CFCs, HCFCs, HFCs and/or HFOs (such as HCFOs), and hydrocarbons, among others. As used herein, "substantially free" when used with reference to the absence of physical blowing agents, means that physical blowing agent is present, if at all, in an amount of less than 5% by weight, such as less than 1% by weight or less than 0.1% by weight, based on the total weight of blowing agent.

The polyurethane foam-forming compositions of this specification comprise a catalyst, such as an aliphatic tertiary amine (such as trimethylamine and/or tetramethylbutanediamine), a cycloaliphatic tertiary amine (such as 1,4-diaza (2,2,2) bicyclooctane), an aliphatic amino ether (such as dimethylaminoethyl ether and/or N, N, N-trimethyl-N- hydroxyethyl bisaminoethyl ether), a cycloaliphatic amino ether (such as N-ethylmorpholine), an aliphatic amidine, a cycloaliphatic amidine, a urea, a derivative of urea (such as aminoalkyl ureas, including (3-dimethylaminopropylamine)urea), a tin catalyst (such as di-n-octyltin mercaptide), a tin (II) salts of carboxylic acid (such as tin (II) ricinoleate, tin (II) acetate, tin (II) octoate, tin (II) ethylhexanoate and tin (II) laurate), a tin (IV) compound (such as dibutyltin oxide, dibutyltin dichloride, dibutyltin diacetate, dibutyltin dilaurate, dibutyltin maleate, and dioctyltin diacetate), or a mixture of any two or more thereof. Specific examples of suitable catalysts are (3-dimethylaminopropylamine) urea, 2-(2-dimethylaminoethoxy) ethanol, N, N-bis (3-dimethylaminopropyl) -N-isopropanolamine, N, N, N-trimethyl-N- hydroxyethyl bisaminoethyl ether, 3-dimethylaminopropylamine, or a mixture of any two or more thereof.

In some implementations, the catalyst may comprise a non-emissive balanced amines that binds chemically into the polyurethane foam matrix, thereby eliminating contributions to odor and VOC emissions or may comprise an amine of sufficiently high enough molecular weight so as to not to contribute to VOC emissions, such catalysts often being collectively referred to as non-fugitive amine catalysts. Examples of such catalysts include Dabco NE-300 and Dabco NE-500 from Air Products, N,N-bis(3-dimethyl-aminopropyl)-N-isopropanolamine (commercially available as Jeffcat ZR 50), N-(3-dimethyaminopropyl)-N.N-diisopropanolamine (commercially available as Jeffcat DPA), 1,4-diazabicyclo[2.2.2]octane-2-methanol (commercially available as RZETA from TOSOH Corporation).

In some implementations, the catalyst is present in an amount of 0.001 to 2.0 % by weight, such as 0.01 to 1.0 % by weight, 0.1 to 0.5 % by weight, or, in some cases, 0.2 to 0.4 % by weight, by weight of the polyurethane foam-forming composition.

In some implementations, the foam-forming composition also comprises a surfactant, such as organosilicon compounds, including polysiloxane-polyalkyene-block copolymers, such as a polyether-modified polysiloxane, as well as polyethylene glycol ethers of long chain alcohols, tertiary amine or alkanolamine salts of long chain alkyl acid sulfate esters, alkylsulfonic esters, or alkylarylsulfonic acids.

Additional materials which may optionally be included in the inventions of this specification include: pigments, colorants, fillers, antioxidants, flame retardants, gels, phase change materials, and stabilizers, among others.

The polyurethane foam-forming compositions described in this specification can be particularly suitable for the production of "hypersoft" polyurethane foams and "viscoelastic" polyurethane foam. These foams are manufactured by mixing together polyisocyanate with polyol, blowing agent, and catalyst, often in the presence of other standard additives, such as surfactant, filler, colorant, flame retardant, or a combination of any two or more thereof. The foaming mixture may be allowed to rise freely in at least one direction, as in a slabstock or bunstock process, or it may be constrained to a fixed shape as in the molded foam process. Included are "variable pressure foaming" process in which a vacuum or pressure is applied during foaming by means of enclosure in a pressure chamber, and the "liquid carbon dioxide" processes in which liquified carbon dioxide is introduced into the foaming mixture through special mechanical equipment to aid in blowing the foam.

Thus, as should be appreciated, aspects of this specification relate to methods of making polyurethane foams. These methods comprise reacting a polyisocyanate with a polyol composition as described in this specification in the presence of components comprising a catalyst and blowing agent composition comprising water.

Various explicit disclosures of the subject matter described herein are set out in the following numbered paragraphs:
Paragraph 1. A polyurethane foam-forming compositions comprising: (a) a polyisocyanate present in an amount sufficient to provide an isocyanate index of 70 to 130 wherein the isocyanate index is the molar ratio of isocyanate groups to hydroxyl groups in the polyurethane foam-forming composition, multiplied by 100; (b) a polyol composition having a weight average hydroxyl functionality of 2 to 4, a weight average OH number of 20 to 120 mg KOH/g polyol composition as determined according to ASTM D4274-16, and comprising a filled polyol comprising: (i) solid polymer particles having an average particle size of no more than 1.5 microns, as determined by ASTM 9121-18; and (ii) a carrier polyol comprising a polyether polyol P1 having a functionality of 2 to 6, an OH number of 20 to 120 mg KOH/g polyether polyol P1, and a poly(oxyethylene) content of at least 60% by weight, based on total weight of the polyether polyol, which is present in an amount of at least 50% by weight, based on total weight of carrier polyol; (c) a blowing agent composition comprising water; and (d) a catalyst, wherein the filled polyol is present in an amount of at least 5% by weight, based on total weight of polyol in the polyurethane foam-forming composition.
Paragraph 2. The polyurethane foam-forming composition of paragraph 1, wherein the polyisocyanate comprises toluene diisocyanate, such as where the polyisocyanate comprises a mixture of 2,4- and 2,6- toluene diisocyanate, such as a mixture of 79.5 to 81.5 weight percent 2,4-toluene diisocyanate and 18.5 to 20.5 weight percent of 2,6-toluene diisocyanate.
Paragraph 3. The polyurethane foam-forming composition of paragraph 1 or paragraph 2, wherein the polyisocyanate is present in an amount sufficient to provide an isocyanate index of 80 to 120, 90 to 110, 95 to 100, or 95 to 100.
Paragraph 4. The polyurethane foam-forming composition of one of paragraph 1 to paragraph 3, wherein the polyol composition has a weight average hydroxyl functionality of 2.5 to 3.5 or 2.5 to 3.
Paragraph 5. The polyurethane foam-forming composition of one of paragraph 1 to paragraph 4, wherein the polyol composition has a weight average OH number of 20 to 100 mg KOH/g polyol composition, 20 to 80 mg KOH/g polyol composition, or 40 to 80 mg KOH/g polyol composition.
Paragraph 6. The polyurethane foam-forming composition of one of paragraph 1 to paragraph 5, wherein the polyol composition has a poly(oxyethylene) content of at least 15% by weight, at least 35% by weight, 40 to 80% by weight, 40 to 60% by weight, or 50 to 60% by weight, based on the total weight of polyol in the polyurethane foam-forming composition.
Paragraph 7. The polyurethane foam-forming composition of one of paragraph 1 to paragraph 6, wherein the filled polyol has a solids content of 20% to 75% by weight, 20% to 60% by weight, or 20% to 40% by weight, based on the total weight of the filled polyol.
Paragraph 8. The polyurethane foam-forming composition of one of paragraph 1 to paragraph 7, wherein the filled polyol has a viscosity (in in millipascal-seconds (mPa+s) measured at 25°C on an Anton Paar SVM3000 viscometer) of less than 50,000 mPa+s, less than 40,000 mPa+s, less than 30,000 mPa+s, less than 20,000 mPa+s or less than 10,000 mPa.s.
Paragraph 9. The polyurethane foam-forming composition of one of paragraph 1 to paragraph 8, wherein the solid polymer particles have an average particle size of 0.1 to 1.5 microns, or 0.2 to 1.4 microns, or 0.5 to 1.0 micron, as determined by ASTM 9121-18 and/or the solid polymer particles exhibit a multimodal particle size distribution, such as where the filled polyol has a particle size distribution curve (as measured by the particle distribution volume fraction) having at least two peaks in which the first peak is at a mean particle size of no more than 1 micron, such as at a particle size of 0.1 to 1 micron, 0.2 to 0.8 micron, or, 0.3 to 0.7 micron, and the second peak is at a mean particle size of more than 1 micron, such as more than 1 to 5 micron.
Paragraph 10. The polyurethane foam-forming composition of one of paragraph 1 to paragraph 9, wherein the filled polyol comprises a polymer polyol wherein the solid polymer particles comprise a free radical polymerization reaction product of an ethylenically unsaturated monomer.
Paragraph 11. The polyurethane foam-forming composition of one of paragraph 1 to paragraph 10, wherein the polyether polyol P1 has a functionality of 2 to 4, 2.5 to 3.5, or 2.8 to 3.2.
Paragraph 12. The polyurethane foam-forming composition of one of paragraph 1 to paragraph 11, wherein the polyether polyol P1 has an OH number of 20 to 100 mg KOH/g polyether polyol P1, 20 to 50 mg KOH/g polyether polyol P1, 25 to 50 mg KOH/g polyether polyol P1, or 30 to 50 mg KOH/g polyether polyol P1.
Paragraph 13. The polyurethane foam-forming composition of one of paragraph 1 to paragraph 12, wherein the polyether polyol P1 has a poly(oxyethylene) content of 60% to 90% by weight, 60 to 80% by weight, or 65 to 75% by weight, based on the total weight of the polyether polyol P1.
Paragraph 14. The polyurethane foam-forming composition of one of paragraph 1 to paragraph 13, wherein the polyether polyol P1 comprises an alkylene oxide addition product of a starter compound having a hydroxyl functionality of 2 to 6, 2 to 4, or 3, wherein the alkylene oxide comprises ethylene oxide and/or propylene oxide.
Paragraph 15. The polyurethane foam-forming composition of one of paragraph 1 to paragraph 14, wherein the polyether polyol P1 is present in an amount of at least 70% by weight, at least 80% by weight, or at least 90% by weight, or 100% by weight, based on total weight of carrier polyol.
Paragraph 16. The polyurethane foam-forming composition of one of paragraph 1 to paragraph 15, wherein the filled polyol comprises polymer polyol comprising a reaction product of a reaction mixture comprising: (a) the carrier polyol; (b) an ethylenically unsaturated monomer, (c) a preformed stabilizer, (d) a free radical initiator, and optionally (e) a polymer control agent.
Paragraph 17. The polyurethane foam-forming composition of paragraph 16, wherein the ethylenically unsaturated monomer comprises styrene and acrylonitrile, such as where styrene and acrylonitrile are present in a weight ratio of styrene to acrylonitrile (S:AN) of 80:20 to 20:80, 75:25 to 25:75, 60:40 to 40:60, or 40:60 to 50:50.
Paragraph 18. The polyurethane foam-forming composition of paragraph 15 or paragraph 16, wherein the preformed stabilizer comprises a reaction product of a reaction mixture comprising: (a) a macromer containing reactive unsaturation, (b) an ethylenically unsaturated monomer, (c) a free radical initiator, (d) a polymer control agent; and, in some cases, (e) a diluent.
Paragraph 19. The polyurethane foam-forming composition of paragraph 18, wherein the macromer comprises a reaction product of a reaction mixture comprising: (i) an H-functional starter having a functionality of 2 to 8 and a hydroxyl number of 20 to 50; (ii) 0.1 to 3% by weight, based on 100% by weight of the sum of components (i), (ii) and (iii), of a hydroxyl-reactive compound that contains reactive unsaturation; and, optionally, (iii) 0 to 3% by weight, such as 0.05 to 2.5% by weight, or 0.1 to 1.5% by weight, based on 100% by weight of the sum of components (i), (ii) and (iii), of a diisocyanate.
Paragraph 20. The polyurethane foam-forming composition of paragraph 19, wherein the H-functional starter has a hydroxyl functionality of 3 to 6 and/or a hydroxyl number of 25 to 40 mg KOH/g starter.
Paragraph 21. The polyurethane foam-forming composition of paragraph 19 or paragraph 20, wherein the H-functional starter comprises a reaction product of a starter, such as glycerin, trimethylolpropane, pentaerythritol, dipentaerythritol, sorbitol, mannitol, or a mixture of any two or more thereof, with an alkylene oxide comprising propylene oxide and/or ethylene oxide, wherein ethylene oxide is utilized in an amount of 1 to 40% by weight, 5 to 30% by weight or 10 to 25% by weight, based on the total weight of the starter compound, such as where all or a portion of the ethylene oxide is added as a cap on the end of the starter compound, such as where the amount of ethylene oxide added as a cap is 1 to 40% by weight, 3 to 30% by weight or 5 to 25% by weight, based on the total weight of starter.
Paragraph 22. The polyurethane foam-forming composition of one of paragraph 19 to paragraph 21, wherein the hydroxyl-reactive compound that contains reactive unsaturation comprises methyl methacrylate, ethyl methacrylate, maleic anhydride, isopropenyl dimethyl benzyl isocyanate, 2-isocyanatoethyl methacrylate, an adduct of isophorone diisocyanate and 2-hydroxyethyl methacrylate, an adduct of toluenediisocyanate and 2-hydroxypropyl acrylate, or a mixture of any two or more thereof.
Paragraph 23. The polyurethane foam-forming composition of one of paragraph 19 to paragraph 22, wherein the diisocyanate comprises diphenylmethane diisocyanate, such as a mixture of 2,4'-diphenylmethane diisocyanate, 4,4'-diphenylmethane diisocyanate and/or 2,2'-diphenyl-methane diisocyanate.
Paragraph 24. The polyurethane foam-forming composition of one of paragraph 18 to paragraph 23, wherein macromer is present in an amount of 10 to 40% by weight or 15 to 35% by weight, based on total weight of the reaction mixture used to produce the preformed stabilizer.
Paragraph 25. The polyurethane foam-forming composition of one of paragraph 18 to paragraph 24, wherein the ethylenically unsaturated monomer present in the reaction mixture to form the preformed stabilizer comprises a mixture of acrylonitrile and at least one other ethylenically unsaturated comonomer which is copolymerizable with acrylonitrile, such as styrene and its derivatives, an acrylate, a methacrylate, or a mixture of any two or more thereof, such as where the ethylenically unsaturated monomer comprises a mixture of acrylonitrile and styrene in which acrylonitrile is present in an amount of 20 to 80% by weight or 30 to 70% by weight, based on the total weight of the monomer mixture, and styrene is used in an amount of 80 to 20% by weight or 70 to 30% by weight percent, based on the total weight of the monomer mixture.
Paragraph 26. The polyurethane foam-forming composition of one of paragraph 18 to paragraph 25, wherein the ethylenically unsaturated monomer is used in an amount of 10 to 30% by weight or 15 to 25% by weight, based on the total weight of the reaction mixture used to produce the preformed stabilizer.
Paragraph 27. The polyurethane foam-forming composition of one of paragraph 18 to paragraph 26, wherein the free radical initiator comprises a peroxide, such as hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, or a mixture thereof, such as where the free radical initiator is present in an amount of 0.01 to 2% by weight, 0.05 to 1% by weight or 0.05 to 0.3% by weight, based on the total weight of the reaction mixture used to produce the preformed stabilizer.
Paragraph 28. The polyurethane foam-forming composition of one of paragraph 18 to paragraph 27, wherein the polymer control agent comprises methanol, ethanol, n-propanol, isopropanol, n-butanol, sec.-butanol, t-butanol, n-pentanol, 2-pentanol, 3-pentanol, ethylbenzene, toluene, or a mixture of any two or more thereof, such as where the polymer control agent is present in an amount of 30 to 80% by weight or 40 to 70% by weight, based on the total weight of the reaction mixture used to produce the preformed stabilizer.
Paragraph 29. The polyurethane foam-forming composition of one of paragraph 18 to paragraph 28, wherein the diluent comprises an alkylene oxide adduct having a hydroxyl functionality of greater 2, such as where the diluent is present in an amount of 0 to 40% by weight, 0 to 20% by weight, or, 0 to 10% by weight, based on the total weight of the reaction mixture used to produce the preformed stabilizer.
Paragraph 30. The polyurethane foam-forming composition of one of paragraph 16 to paragraph 29, wherein the reaction mixture used to produce the polymer polyol comprises a free radical initiator comprising a peroxide, such as hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, or a mixture of any two or more thereof, such as where the free radical initiator is present in an amount of 0.01 to 2% by weight, based on 100% by weight of the polymer polyol.
Paragraph 31. The polyurethane foam-forming composition of one of paragraph 16 to paragraph 30, wherein the reaction mixture used to prepare the polymer polyol further comprises a chain transfer agent comprising a mercaptan, such as dodecane thiol, ethane thiol, octane thiol, and toluene thiol, a halogenated hydrocarbon, such as carbon tetrachloride, carbon tetrabromide, and chloroform, an amines, such as diethylamine, or a mixture of any two or more thereof, such as where the chain transfer agent is present in an amount of 0.1 to 2% by weight or 0.2 to 1% by weight, based on the total weight of the reaction mixture used to produce the polymer polyol.
Paragraph 32. The polyurethane foam-forming composition of one of paragraph 16 to paragraph 31, wherein the reaction mixture used to prepare the polymer polyol further comprises a polymer control agent, such as various mono-ols (i.e. monohydroxy alcohols), aromatic hydrocarbons, and ethers. Specific examples of suitable polymer control agents are alcohols containing at least one carbon atom, such as methanol, ethanol, n-propanol, isopropanol, n-butanol, sec.-butanol, t-butanol, n-pentanol, 2-pentanol, 3-pentanol, and the like, and mixtures of any two or more thereof. Other suitable polymer control agents are ethylbenzene and toluene.
Paragraph 33. The polyurethane foam-forming composition of one of paragraph 1 to paragraph 32, wherein the filled polyol is present in an amount of at least 10% by weight, 10 to 90% by weight, or 10 to 50% by weight, based on total weight of polyol in the polyurethane foam-forming composition.
Paragraph 34. The polyurethane foam-forming composition of one of paragraph 1 to paragraph 33, wherein the solid polymer particles are present in an amount of at least 1% by weight, 1 to 20% by weight, or 5 to 20% by weight, based on total weight of polyol in the polyurethane foam-forming composition.
Paragraph 35. The polyurethane foam-forming composition of one of paragraph 1 to paragraph 34, wherein the polyol composition further comprises a polyether polyol P2 having a functionality of greater than 2, greater than 2 up to 6, 3 to 6, 3 to 5, 3 to 4, or 3; a poly(oxyethylene) content of 0 to 50 % by weight, 1 to 25 % by weight, or 10 to 30 % by weight; more than 50 mol %, such as 80 to 90 mole %, of primary OH groups; and an OH number of 8 to 112 mg KOH/g polyether polyol P2, 20 to 50 mg KOH/g polyether polyol P2 or 25 to 35 mg KOH/g polyether polyol P2.
Paragraph 36. The polyurethane foam-forming composition of paragraph 35, wherein the polyether polyol P2 is present in an amount of up to 50% by weight, 1 to 50% by weight, 10 to 50% by weight, or, 10 to 30% by weight, based on the total weight of polyol present in the polyurethane foam-forming composition.
Paragraph 37. The polyurethane foam-forming composition of paragraph 35 or paragraph 36, wherein the polyether polyol P2 is present as a carrier polyol for a filled polyol, such as a PMPO.
Paragraph 38. The polyurethane foam-forming composition of one of paragraph 1 to paragraph 37, wherein the polyol composition comprises a polyether polyol P3 with a functionality of 2 to 6, such as 3, a poly(oxyethylene) content of at least 60% by weight or at least 70% by weight; at least 50 mol %, such as 50 to 60 mole %, of primary OH groups; and a hydroxyl number of 10 to 112 mg KOH/g, such as 30 to 50 mg KOH/g, which may be introduced to the composition separately from the filled polyol, such as where such polyether polyol P3 is present in an amount of at least 5% by weight, at least 10% by weight, 10 to 90% by weight, or 10 to 50% by weight, based on total weight of polyol in the polyurethane foam-forming composition.
Paragraph 39. The polyurethane foam-forming composition of one of paragraph 1 to paragraph 38, further comprising a compound with at least two isocyanate-reactive hydrogen atoms and with a molecular weight from 62 to 399 g/mol.
Paragraph 40. The polyurethane foam-forming composition of one of paragraph 1 to paragraph 39, wherein the polyol composition comprises no more than 10% by weight, no more than 5% by weight, no more than 2% by weight, or no more than 1% by weight, based on the total weight of the polyol composition, of a polyol P4 having an OH number greater than 120 mg KOH/g.
Paragraph 41. The polyurethane foam-forming composition of one of paragraph 1 to paragraph 40, wherein water is present in an amount of at least 0.5% by weight, such as 0.5 to 5 % by weight, 0.5 to 3% by weight or 1 to 3% by weight, based on the total weight of polyol that is present in the polyurethane foam-forming composition.
Paragraph 42. The polyurethane foam-forming composition of one of paragraph 1 to paragraph 41, wherein the polyurethane foam-forming composition is substantially free of physical blowing agent.
Paragraph 43. The polyurethane foam-forming composition of one of paragraph 1 to paragraph 42, wherein the catalyst comprises an aliphatic tertiary amine (such as trimethylamine and/or tetramethylbutanediamine), a cycloaliphatic tertiary amine (such as 1,4-diaza (2,2,2) bicyclooctane), an aliphatic amino ether (such as dimethylaminoethyl ether and/or N, N, N-trimethyl-N- hydroxyethyl bisaminoethyl ether), a cycloaliphatic amino ether (such as N-ethylmorpholine), an aliphatic amidine, a cycloaliphatic amidine, a urea, a derivative of urea (such as aminoalkyl ureas, including (3-dimethylaminopropylamine) urea), a tin catalyst (including sulfur-containing tin compounds, such as din-octyltin mercaptide, tin (II) salts of carboxylic acids (such as tin (II) ricinoleate, tin (II) acetate, tin (II) octoate, tin (II) ethylhexanoate and tin (II) laurate), and tin (IV) compounds (such as dibutyltin oxide, dibutyltin dichloride, dibutyltin diacetate, dibutyltin dilaurate, dibutyltin maleate, and dioctyltin diacetate), or a mixture of any two or more thereof, such as where the catalyst is present in an amount of 0.001 to 2.0 % by weight, 0.01 to 1.0 % by weight, 0.1 to 0.5 % by weight, or 0.2 to 0.4 % by weight, by weight of the polyurethane foam-forming composition.
Paragraph 44. A polyurethane foam produced from the polyurethane foam-forming composition of one of paragraph 1 to paragraph 43, such as where the polyurethane foam is a hyper-soft polyurethane foam.
Paragraph 45. The polyurethane foam of paragraph 44, wherein the polyurethane foam has a density, measured according to ASTM D1622-14, of no more than 4 lb/ft³ (no more than 64 kg/m³), such as 1 to 4 lb/ft³ (16 to 64 kg/m³), 1 to 3 lb/ft³ (16 to 48 kg/m³), or 1.5 to 2.5 lb/ft³ (24 to 40 kg/m³).
Paragraph 46. A method of making polyurethane foam, comprising reacting a polyisocyanate with a polyol composition in the presence of components comprising a blowing agent composition and a catalyst, wherein: (a) the polyisocyanate is present in an amount sufficient to provide an isocyanate index of 70 to 130 wherein isocyanate index is the molar ratio of isocyanate groups to hydroxyl groups present in the polyurethane foam-forming composition, multiplied by 100; (b) the polyol composition has a weight average hydroxyl functionality of 2 to 4, a weight average OH number of 20 to 120 mg KOH/g polyol composition, and comprises a filled polyol comprising: (i) solid polymer particles having an average particle size of no more than 1.5 microns, as determined by ASTM 9121-18; and (ii) a carrier polyol comprising a polyether polyol P1 having a functionality of 2 to 6, an OH number of 20 to 120 mg KOH/g polyether polyol P1, and a poly(oxyethylene) content of at least 60% by weight, based on total weight of the polyether polyol P1, which is present in an amount of at least 50% by weight, based on total weight of carrier polyol, and wherein the filled polyol is present in an amount of at least 5% by weight, based on total weight of polyol that is present; and (c) the blowing agent composition comprises water.
Paragraph 47. The method of paragraph 46 wherein the polyisocyanate comprises toluene diisocyanate, such as where the polyisocyanate comprises a mixture of 2,4- and 2,6- toluene diisocyanate, such as a mixture of 79.5 to 81.5 weight percent 2,4-toluene diisocyanate and 18.5 to 20.5 weight percent of 2,6-toluene diisocyanate.
Paragraph 48. The method of paragraph 46 or paragraph 47, wherein the polyisocyanate is present in an amount sufficient to provide an isocyanate index of 80 to 120, 90 to 110, 95 to 100, or 95 to 100.
Paragraph 49. The method of one of paragraph 46 to paragraph 48, wherein the polyol composition has a weight average hydroxyl functionality of 2.5 to 3.5 or 2.5 to 3.
Paragraph 50. The method of one of paragraph 46 to paragraph 49, wherein the polyol composition has a weight average OH number of 20 to 100 mg KOH/g polyol composition, 20 to 80 mg KOH/g polyol composition, or 40 to 80 mg KOH/g polyol composition.
Paragraph 51. The method of one of paragraph 46 to paragraph 50, wherein the polyol composition has a poly(oxyethylene) content of at least 15% by weight, at least 35% by weight, 40 to 80% by weight, 40 to 60% by weight, or 50 to 60% by weight, based on the total weight of polyol in the polyurethane foam-forming composition.
Paragraph 52. The method of one of paragraph 46 to paragraph 51, wherein the filled polyol has a solids content of 20% to 75% by weight, 20% to 60% by weight, or 20% to 40% by weight, based on the total weight of the filled polyol.
Paragraph 53. The method of one of paragraph 46 to paragraph 52, wherein the filled polyol has a viscosity (in in millipascal-seconds (mPa.s) measured at 25°C on an Anton Paar SVM3000 viscometer) of less than 50,000 mPa.s, less than 40,000 mPa+s, less than 30,000 mPa.s, less than 20,000 mPa.s or less than 10,000 mPa.s.
Paragraph 54. The method of one of paragraph 46 to paragraph 53, wherein the solid polymer particles have an average particle size of 0.1 to 1.5 microns, 0.2 to 1.4microns, or 05 to 1.0 micron, as determined by ASTM 9121-18 and/or the solid polymer particles exhibit a multimodal particle size distribution, such as where the filled polyol has a particle size distribution curve (as measured by the particle distribution volume fraction) having at least two peaks in which the first peak is at a mean particle size of no more than 1 micron, such as at a particle size of 0.1 to 1 micron, 0.2 to 0.8 micron, or, 0.3 to 0.7 micron, and the second peak is at a mean particle size of more than 1 micron, such as more than 1 to 5 micron.
Paragraph 55. The method of one of paragraph 46 to paragraph 54, wherein the filled polyol comprises a polymer polyol wherein the solid polymer particles comprise a free radical polymerization reaction product of an ethylenically unsaturated monomer.
Paragraph 56. The method of one of paragraph 46 to paragraph 55, wherein the polyether polyol P1 has a functionality of 2 to 4, 2.5 to 3.5, or 2.8 to 3.2.
Paragraph 57. The method of one of paragraph 46 to paragraph 56, wherein the polyether polyol P1 has an OH number of 20 to 100 mg KOH/g polyether polyol P1, 20 to 50 mg KOH/g polyether polyol P1, 25 to 50 mg KOH/g polyether polyol P1, or 30 to 50 mg KOH/g polyether polyol P1.
Paragraph 58. The method of one of paragraph 46 to paragraph 57, wherein the polyether polyol P1 has a poly(oxyethylene) content of 60% to 90% by weight, 60 to 80% by weight, or 65 to 75% by weight, based on the total weight of the polyether polyol P1.
Paragraph 59. The method of one of paragraph 46 to paragraph 58, wherein the polyether polyol P1 comprises an alkylene oxide addition product of a starter compound having a hydroxyl functionality of 2 to 6, 2 to 4, or 3, wherein the alkylene oxide comprises ethylene oxide and/or propylene oxide.
Paragraph 60. The method of one of paragraph 46 to paragraph 59, wherein the polyether polyol P1 is present in an amount of at least 70% by weight, at least 80% by weight, or at least 90% by weight, or 100% by weight, based on total weight of carrier polyol.
Paragraph 61. The method of one of paragraph 46 to paragraph 60, wherein the filled polyol comprises polymer polyol comprising a reaction product of a reaction mixture comprising: (a) the carrier polyol; (b) an ethylenically unsaturated monomer, (c) a preformed stabilizer, and (d) a free radical initiator.
Paragraph 62. The method of paragraph 61, wherein the ethylenically unsaturated monomer comprises styrene and acrylonitrile, such as where styrene and acrylonitrile are present in a weight ratio of styrene to acrylonitrile (S:AN) of 80:20 to 20:80, 75:25 to 25:75, 60:40 to 40:60, or 40:60 to 50:50.
Paragraph 63. The method of paragraph 61 or paragraph 62, wherein the preformed stabilizer comprises a reaction product of a reaction mixture comprising: (a) a macromer containing reactive unsaturation, (b) an ethylenically unsaturated monomer, (c) a free radical initiator, (d) a polymer control agent; and, in some cases, (e) a diluent.
Paragraph 64. The method of paragraph 63, wherein the macromer comprises a reaction product of a reaction mixture comprising: (i) an H-functional starter having a functionality of 2 to 8 and a hydroxyl number of 20 to 50; (ii) 0.1 to 3% by weight, based on 100% by weight of the sum of components (i), (ii) and (iii), of a hydroxyl-reactive compound that contains reactive unsaturation; and, optionally, (iii) 0 to 3% by weight, such as 0.05 to 2.5% by weight, or 0.1 to 1.5% by weight, based on 100% by weight of the sum of components (i), (ii) and (iii), of a diisocyanate.
Paragraph 65. The method of paragraph 64, wherein the H-functional starter has a hydroxyl functionality of 3 to 6 and/or a hydroxyl number of 25 to 40 mg KOH/g starter.
Paragraph 66. The method of paragraph 64 or paragraph 65, wherein the H-functional starter comprises a reaction product of a starter, such as glycerin, trimethylolpropane, pentaerythritol, dipentaerythritol, sorbitol, mannitol, or a mixture of any two or more thereof, with an alkylene oxide comprising propylene oxide and/or ethylene oxide, wherein ethylene oxide is utilized in an amount of 1 to 40% by weight, 5 to 30% by weight or 10 to 25% by weight, based on the total weight of the starter compound, such as where all or a portion of the ethylene oxide is added as a cap on the end of the starter compound, such as where the amount of ethylene oxide added as a cap is 1 to 40% by weight, 3 to 30% by weight or 5 to 25% by weight, based on the total weight of starter.
Paragraph 67. The method of one of paragraph 64 to paragraph 66, wherein the hydroxyl-reactive compound that contains reactive unsaturation comprises methyl methacrylate, ethyl methacrylate, maleic anhydride, isopropenyl dimethyl benzyl isocyanate, 2-isocyanatoethyl methacrylate, an adduct of isophorone diisocyanate and 2-hydroxyethyl methacrylate, an adduct of toluenediisocyanate and 2-hydroxypropyl acrylate, or a mixture of any two or more thereof.
Paragraph 68. The method of one of paragraph 64 to paragraph 67, wherein the diisocyanate comprises diphenylmethane diisocyanate, such as a mixture of 2,4'-diphenylmethane diisocyanate, 4,4'-diphenylmethane diisocyanate and/or 2,2'-diphenyl-methane diisocyanate.
Paragraph 69. The method of one of paragraph 64 to paragraph 68, wherein macromer is present in an amount of 10 to 40% by weight or 15 to 35% by weight, based on total weight of the reaction mixture used to produce the preformed stabilizer.
Paragraph 70. The method of one of paragraph 64 to paragraph 69, wherein the ethylenically unsaturated monomer present in the reaction mixture to form the preformed stabilizer comprises a mixture of acrylonitrile and at least one other ethylenically unsaturated comonomer which is copolymerizable with acrylonitrile, such as styrene and its derivatives, an acrylate, a methacrylate, or a mixture of any two or more thereof, such as where the ethylenically unsaturated monomer comprises a mixture of acrylonitrile and styrene in which acrylonitrile is present in an amount of 20 to 80% by weight or 30 to 70% by weight, based on the total weight of the monomer mixture, and styrene is used in an amount of 80 to 20% by weight or 70 to 30% by weight percent, based on the total weight of the monomer mixture.
Paragraph 71. The method of one of paragraph 64 to paragraph 70, wherein the ethylenically unsaturated monomer is used in an amount of 10 to 30% by weight or 15 to 25% by weight, based on the total weight of the reaction mixture used to produce the preformed stabilizer.
Paragraph 72. The method of one of paragraph 64 to paragraph 71, wherein the free radical initiator comprises a peroxide, such as hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, or a mixture thereof, such as where the free radical initiator is present in an amount of 0.01 to 2% by weight, 0.05 to 1% by weight or 0.05 to 0.3% by weight, based on the total weight of the reaction mixture used to produce the preformed stabilizer.
Paragraph 73. The method of one of paragraph 64 to paragraph 72, wherein the polymer control agent comprises methanol, ethanol, n-propanol, isopropanol, n-butanol, sec.-butanol, t-butanol, n-pentanol, 2-pentanol, 3-pentanol, ethylbenzene, toluene, or a mixture of any two or more thereof, such as where the polymer control agent is present in an amount of 30 to 80% by weight or 40 to 70% by weight, based on the total weight of the reaction mixture used to produce the preformed stabilizer.
Paragraph 74. The method of one of paragraph 63 to paragraph 73, wherein the diluent comprises an alkylene oxide adduct having a hydroxyl functionality of greater 2, such as where the diluent is present in an amount of 0 to 40% by weight, 0 to 20% by weight, or, 0 to 10% by weight, based on the total weight of the reaction mixture used to produce the preformed stabilizer.
Paragraph 75. The method of one of paragraph 62 to paragraph 74, wherein the reaction mixture used to produce the polymer polyol comprises a free radical initiator comprising a peroxide, such as hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, or a mixture of any two or more thereof, such as where the free radical initiator is present in an amount of 0.01 to 2% by weight, based on 100% by weight of the polymer polyol.
Paragraph 76. The method of one of paragraph 62 to paragraph 75, wherein the reaction mixture used to prepare the polymer polyol further comprises a chain transfer agent comprising a mercaptan, such as dodecane thiol, ethane thiol, octane thiol, and toluene thiol, a halogenated hydrocarbon, such as carbon tetrachloride, carbon tetrabromide, and chloroform, an amines, such as diethylamine, or a mixture of any two or more thereof, such as where the chain transfer agent is present in an amount of 0.1 to 2% by weight or 0.2 to 1% by weight, based on the total weight of the reaction mixture used to produce the polymer polyol.
Paragraph 77. The method of one of paragraph 62 to paragraph 75, wherein the reaction mixture used to prepare the polymer polyol further comprises a polymer control agent, such as various mono-ols (i.e. monohydroxy alcohols), aromatic hydrocarbons, and ethers. Specific examples of suitable polymer control agents are alcohols containing at least one carbon atom, such as methanol, ethanol, n-propanol, isopropanol, n-butanol, sec.-butanol, t-butanol, n-pentanol, 2-pentanol, 3-pentanol, and the like, and mixtures of any two or more thereof. Other suitable polymer control agents are ethylbenzene and toluene.
Paragraph 78. The method of one of paragraph 46 to paragraph 77, wherein the filled polyol is present in an amount of at least 10% by weight, 10 to 90% by weight, or 10 to 50% by weight, based on total weight of polyol in the polyurethane foam-forming composition.
Paragraph 79. The method of one of paragraph 46 to paragraph 78, wherein the solid polymer particles are present in an amount of at least 1% by weight, 1 to 20% by weight, or 5 to 20% by weight, based on total weight of polyol in the polyurethane foam-forming composition.
Paragraph 80. The method of one of paragraph 46 to paragraph 79, wherein the polyol composition further comprises a polyether polyol P2 having a functionality of greater than 2, greater than 2 up to 6, 3 to 6, 3 to 5, 3 to 4, or 3; a poly(oxyethylene) content of 0 to 50 % by weight, 1 to 25 % by weight, or 10 to 30 % by weight; more than 50 mol %, such as 80 to 90 mole %, of primary OH groups; and an OH number of 8 to 112 mg KOH/g polyether polyol P2, 20 to 50 mg KOH/g polyether polyol P2 or 25 to 35 mg KOH/g polyether polyol P2.
Paragraph 81. The method of paragraph 80, wherein the polyether polyol P2 is present in an amount of up to 50% by weight, 1 to 50% by weight, 10 to 50% by weight, or, 10 to 30% by weight, based on the total weight of polyol that is present.
Paragraph 82. The method of paragraph 80 or paragraph 81, wherein the polyether polyol P2 is present as a carrier polyol for a filled polyol, such as a PMPO.
Paragraph 83. The method of one of paragraph 46 to paragraph 82, wherein the polyol composition comprises a polyether polyol P3 with a functionality of 2 to 6, such as 3, a poly(oxyethylene) content of at least 60% by weight or at least 70% by weight; at least 50 mol %, such as 50 to 60 mole %, of primary OH groups; and a hydroxyl number of 10 to 112 mg KOH/g, such as 30 to 50 mg KOH/g, which may be introduced to the composition separately from the filled polyol, such as where such polyether polyol P3 is present in an amount of at least 5% by weight, at least 10% by weight, 10 to 90% by weight, or 10 to 50% by weight, based on total weight of polyol in the polyurethane foam-forming composition.
Paragraph 83. The method of one of paragraph 46 to paragraph 83, further comprising a compound with at least two isocyanate-reactive hydrogen atoms and with a molecular weight from 62 to 399 g/mol.
Paragraph 84. The method of one of paragraph 46 to paragraph 84, wherein the polyol composition comprises no more than 10% by weight, no more than 5% by weight, no more than 2% by weight, or no more than 1% by weight, based on the total weight of the polyol composition, of a polyol P4 having an OH number greater than 120 mg KOH/g.
Paragraph 85. The method of one of paragraph 46 to paragraph 85, wherein water is present in an amount of at least 0.5% by weight, such as 0.5 to 5% by weight, 0.5 to 3% by weight or 1 to 3% by weight, based on the total weight of polyol that is present in the polyurethane foam-forming composition.
Paragraph 86. The method of one of paragraph 46 to paragraph 86, wherein the polyurethane foam-forming composition is substantially free of physical blowing agent.
Paragraph 87. The method of one of paragraph 46 to paragraph 87, wherein the catalyst comprises an aliphatic tertiary amine (such as trimethylamine and/or tetramethylbutanediamine), a cycloaliphatic tertiary amine (such as 1,4-diaza (2,2,2) bicyclooctane), an aliphatic amino ether (such as dimethylaminoethyl ether and/or N, N, N-trimethyl-N- hydroxyethyl bisaminoethyl ether), a cycloaliphatic amino ether (such as N-ethylmorpholine), an aliphatic amidine, a cycloaliphatic amidine, a urea, a derivative of urea (such as aminoalkyl ureas, including (3-dimethylaminopropylamine) urea), a tin catalyst (including sulfur-containing tin compounds, such as di-n-octyltin mercaptide, tin (II) salts of carboxylic acids (such as tin (II) ricinoleate, tin (II) acetate, tin (II) octoate, tin (II) ethylhexanoate and tin (II) laurate), and tin (IV) compounds (such as dibutyltin oxide, dibutyltin dichloride, dibutyltin diacetate, dibutyltin dilaurate, dibutyltin maleate, and dioctyltin diacetate), or a mixture of any two or more thereof, such as where the catalyst is present in an amount of 0.001 to 2.0 % by weight, 0.01 to 1.0 % by weight, 0.1 to 0.5 % by weight, or 0.2 to 0.4 % by weight, by weight of the polyurethane foam-forming composition.
Paragraph 89. A polyurethane foam produced by the method of one of paragraph 46 to paragraph 88, such as where the polyurethane foam is a hyper-soft polyurethane foam.
Paragraph 90. The polyurethane foam of paragraph 88, wherein the polyurethane foam has a density, measured according to ASTM D1622-14, of no more than 4 lb/ft³ (no more than 64 kg/m³), such as 1 to 4 lb/ft³ (16 to 64 kg/m³), 1 to 3 lb/ft³ (16 to 48 kg/m³), or 1.5 to 2.5 lb/ft³ (24 to 40 kg/m³).

The non-limiting and non-exhaustive examples that follow are intended to further describe various non-limiting and non-exhaustive implementations without restricting the scope of the implementations described in this specification.

### EXAMPLES

### PMPO Examples

The following materials were used in the working examples.
**Polyol A:** A propylene oxide adduct of sorbitol containing a 16% ethylene oxide cap with a hydroxyl number of 28
**Isocyanate A:** A monomeric MDI comprising about 42% by weight of the 4,4'-isomer of MDI, about 57% by weight of the 2,4'-isomer of MDI and the balance being the 2,2'-isomer of MDI
**TMI:** Isopropenyl dimethyl benzyl isocyanate (an unsaturated aliphatic isocyanate) sold as TMI^{®} by Allnex
**Initiator 1:** TBPEH (tertiary-butyl peroxy-2-ethylhexanoate), a free-radical polymerization initiator commercially available from United Initiators
**Initiator 2:** AIBN (2,2'-Azobisisobutyronitrile), a free-radical polymerization initiator commercially available as VAZO 64 from Chemours
**Filtration:** Filterability was determined by diluting one part by weight sample (e.g. 200 grams) of polymer polyol with two parts by weight anhydrous isopropanol (e.g. 400 grams) to remove any viscosity-imposed limitations and using a fixed quantity of material relative to a fixed cross-sectional area of screen (e.g. 1 1/8 in. diameter or 2.86 cm), such that all of the polymer polyol and isopropanol solutions passes by gravity through a 700-mesh screen. The 700-mesh screen is made with a Dutch twill weave. The actual screen used had a nominal opening of 30 microns. The amount of sample which passed through the screen within 600 seconds was reported in percent, and a value of 100 percent indicates that over 99 weight percent passed through the screen.
**Macromer A:** Polyol A (99.14%), TMI (0.45%), Isocyanate A (0.40%), and 0.01% of bismuth(III)neodecanoate catalyst were heated at 75 °C for 4 hours.

### PREFORMED STABILIZER (PFS) PREPARATION:

The preformed stabilizer was prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously to the reactor from feed tanks through an in-line static mixer and then through a feed tube into the reactor, which was well mixed. The temperature of the reaction mixture was controlled at 120 ± 5°C. The product from the second-stage reactor overflowed continuously through a pressure regulator designed to control the pressure in each stage at 65 psig. The product, i.e. the preformed stabilizer, then passed through a cooler and into a collection vessel. The preformed stabilizer formulation is disclosed in Table A.

**Table A: Preformed Stabilizer Composition**

| **Component** | **PFS** |
|---|---|
| PCA Type | Isopropanol |
| PCA, wt. % | 60.0% |
| Macromer | Macromer 1 |
| Macromer, wt. % | 24.0% |
| Monomer, wt. % | 15.9% |
| Styrene/acrylonitrile ratio | 50:50 |
| Initiator 1, wt. % | 0.1% |

### POLYMER POLYOL PREPARATION:

This series of examples (Table B) relates to the preparation of polymer polyols. The polymer polyols were prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously from feed tanks through an in-line static mixer and then through a feed tube into the reactor, which was well mixed. The temperature of the reaction mixture was controlled at 115 ± 5°C. The product from the second-stage reactor overflowed continuously through a pressure regulator designed to control the pressure in each stage at 45 psig. The product, i.e. the polymer polyol, then passed through a cooler and into a collection vessel. The crude product was vacuum stripped to remove volatiles. The wt. % total polymer in the product was calculated from the concentrations of residual monomers measured in the crude polymer polyol before stripping.

**Table B: Formulations for Polymer Polyols**

| **Component** | **PMPO 1** | **PMPO 3** | **PMPO 4** | **PMPO 5** |
|---|---|---|---|---|
| Base Polyol | 1* | 1* | 1* | 1* |
| Base Polyol (wt. % in feed) | 65.4 | 74.0 | 79.1 | 84.2 |
| PFS (wt. % in feed) | 12.5 | 0 | 0 | 0 |
| Styrene (wt. % in feed) | 8.3 | 10.1 | 8.1 | 6.1 |
| Acrylonitrile (wt. % in Feed) | 13.3 | 15.5 | 12.4 | 9.3 |
| Initiator 2 (wt. % in feed) | 0.48 | 0.45 | 0.42 | 0.42 |
| Total Polymer (wt. %) | 25 | 25 | 20 | 15 |
| Viscosity mPa.s @ 25°C | 5876 | 5649 | 3872 | 3065 |
| Filterability - 700 mesh (seconds) | 275 | 242 | 239 | 225 |
| particle size (microns) | 0.65 | 1.63 | 1.66 | 1.59 |

| | | | | |
|---|---|---|---|---|
| *POLYOL 1 described below. | | | | |

### Foam Examples 1-20

Flexible foams were produced using the formulations given in Table 1 (amounts are in parts by weight), in which:
POLYOL 1 refers to a polyether polyol prepared using 72.7% by weight EO and 27.3% by weight PO as the alkylene oxide and glycerin as OH functional starter, having a functionality of 3, an OH number of 35-39 mg KOH/g polyol, and 82-85 mol % primary OH;
POLYOL 2 refers to a polyether polyol prepared using 7.6% by weight EO and 92.4 % by PO as the alkylene oxide and 87.3% by weight glycerin and 12.7% by weight propylene glycol as OH functional starter, having a functionality of 2.8 and an OH number of 54-58 mg KOH/g polyol;
PMPO 1 refers to PMPO 1 described earlier in the PMPO Examples;
PMPO 2 refers to a PMPO, a 49% solids S:AN dispersion in a carrier polyether polyol having a hydroxyl number of 23.5-27.5 mg KOH/g and a poly(oxyethylene) content of less than 20% by weight;
PMPO 3 refers to PMPO 3 described earlier in the PMPO Examples;
PMPO 4 refers to PMPO 4 described earlier in the PMPO Examples;
PMPO 5 refers to PMPO 5 described earlier in the PMPO Examples;
SURFACTANT 1: alkyl-pendant type organosilicone surfactant, commercially available as Niax^{™} silicone L-620 from Momentive Performance Materials, Inc.;
CATALYST 1: triethylenediamine catalyst, commercially available as Dabco^{™} 33LV from Evonik.

In Foam Examples 1-20, the isocyanate used was an aromatic diisocyanate mixture of 80% 2,4 toluene diisocyanate and 20% 2,6 toluene diisocyanate, available from Covestro as Mondur^{®} TD 80. Free-rise foams were produced in 14"x 14" x 6" (35.6cm x 35.6cm x 15.2cm) cake boxes using a standardized bench mixing process at 2400 rpm. All materials were maintained in a climate controlled environment prior to and during the foaming process. Processing characteristics were monitored for five minutes, including rise profiles versus time, cell opening time (gas blow off), and percent settle (sigh back). After five minutes, the foams were cured for an additional five minutes in a curing oven at 120°C. Any signs of shrinkage during cure were noted. A 12" x 12" x 4" (30.5cm x 30.5cm x 10.2cm) block was cut from the center of each bun and the samples were roller crushed 3 times to a minimum thickness of about 0.5 inches (1.3cm). These samples were conditioned according to ASTM D3574-11 standard.

Examples 1 and 7-20 are comparative examples and Examples 2-6 are inventive examples.

**Table 1**

| | Example | | | | | | | | | | |
|---|---|---|---|---|---|---|---|---|---|---|---|
| Chemical | 1 | 2 | 3 | 4 | 5 | 6 | 7 | 8 | 9 | 10 | 11 |
| POLYOL 1 | 75 | 65 | 55 | 45 | 25 | -- | 75 | 75 | 75 | 70 | 60 |
| POLYOL 2 | 25 | 25 | 25 | 25 | 25 | 25 | 25 | 15 | 5 | -- | -- |
| PMPO 1 | -- | 10 | 20 | 30 | 50 | 75 | -- | -- | -- | -- | -- |
| PMPO 2 | -- | -- | -- | -- | -- | -- | -- | 10 | 20 | 30 | 40 |
| Water (distilled) | 4.3 | 4.3 | 4.3 | 4.3 | 4.3 | 4.3 | 4.3 | 4.3 | 4.3 | 4.3 | 4.3 |
| SURFACTANT 1 | 1.6 | 1.6 | 1.6 | 1.6 | 1.6 | 1.6 | 1.6 | 1.6 | 1.6 | 1.6 | 1.6 |
| Antioxidant | 0.3 | 0.3 | 0.3 | 0.3 | 0.3 | 0.3 | 0.3 | 0.3 | 0.3 | 0.3 | 0.3 |
| CATALYST 1 | 0.28 | 0.28 | 0.28 | 0.28 | 0.28 | 0.28 | 0.28 | 0.28 | 0.28 | 0.28 | 0.28 |
| INDEX (100 A/B) | 95 | 95 | 95 | 95 | 95 | 95 | 95 | 95 | 95 | 95 | 95 |
| % poly(oxyethylene) content | 55.3 | 53.5 | 51.7 | 49.9 | 46.4 | 41.9 | 55.3 | 54.5 | 53.8 | 49.8 | 42.7 |
| % Solid Polymer Particles | 0 | 2.5 | 5 | 7.5 | 12.5 | 18.75 | 0 | 4.9 | 9.8 | 14.7 | 19.6 |

| Physical Properties | | | | | | | | | | | |
|---|---|---|---|---|---|---|---|---|---|---|---|
| Density lb/ft³ (kg/m³) | 1.32 (21.1) | 1.37 (22.0) | 1.37 (21.9) | 1.39 (22.2) | 1.35 (21.5) | 1.29 (20.7) | 1.31 (21.0) | 1.35 (21.5) | 1.32 (21.1) | 1.38 (22.1) | 1.38 (22.0) |
| Airflow ft³/min (L/s) | >10 (>4.7) | >10 (>4.7) | >10 (>4.7) | >10 (>4.7) | >10 (>4.7) | 9.7 (4.6) | >10 (>4.7) | >10 (>4.7) | 5.2 (2.5) | 6.0 (2.8) | 6.1 (2.9) |
| IFD 25% lb/50in² (N/323cm²) | 8.3 (36.7) | 10.2 (45.3) | 11.4 (50.7) | 12.7 (56.6) | 13.3 (59.1) | 16.7 (74.1) | 7.8 (34.7) | 10.1 (45.1) | 16.2 (72.1) | 15.1 (67.3) | 12.2 (54.1) |
| Return Val. @ 25% | 79.4 | 77.6 | 75.7 | 73.5 | 67.8 | 60.7 | 79.2 | 77.5 | 75.0 | 73.5 | 68.3 |
| % | | | | | | | | | | | |
| S.F. 65% / 25% | 2.0 | 2.0 | 2.0 | 2.1 | 2.2 | 2.4 | 2.1 | 2.0 | 2.0 | 2.2 | 2.5 |
| Tensile Strength | 10 (68) | 6 (39) | 6 (41) | 7 (45) | 7 (45) | 7 (50) | 10 (69) | 5 (34) | 6 (39) | 7 (51) | 6 (44) |
| psi (kPa) | | | | | | | | | | | |
| Elongation | 264 | 126 | 122 | 113 | 105 | 72 | 263 | 105 | 87 | 104 | 83 |
| % | | | | | | | | | | | |
| Tear Strength (20"/MIN-STDSP1) | 2.1 (364) | 1.2 (204) | 1.1 (186) | 1.1 (199) | 1.2 (208) | 1.3 (235) | 1.8 (314) | 1.0 (169) | 0.8 (138) | 0.9 (157) | 0.9 (158) |
| pli (N/m) | | | | | | | | | | | |
| 50% Compression Set | 4.4 | 4.2 | 5.2 | 5.9 | 14.6 | 36.5 | 5.9 | 6.1 | 4.6 | 6.0 | 20.2 |
| % | | | | | | | | | | | |
| 90% Compression Set | 5.6 | 6.1 | 6.1 | 7.5 | 15.2 | 54.2 | 7.0 | 7.0 | 5.0 | 6.8 | 24.0 |
| % | | | | | | | | | | | |
| HACS 75% | 7.1 | 7.8 | 10.6 | 11.6 | 37.0 | 58.8 | 7.9 | 6.2 | 5.0 | 7.6 | 45.8 |
| % | | | | | | | | | | | |
| Resilience % | 39 | 35 | 33 | 33 | 30 | 28 | 40 | 37 | 34 | 34 | 32 |

**Table 1(continued)**

| | Example | | | | | | | | |
|---|---|---|---|---|---|---|---|---|---|
| Chemical Name | 12 | 13 | 14 | 15 | 16 | 17 | 18 | 19 | 20 |
| POLYOL 1 | 75 | 65 | 45 | 65 | 55 | 45 | 65 | 55 | 45 |
| POLYOL 2 | 25 | 25 | 25 | 25 | 25 | 25 | 25 | 25 | 25 |
| PMPO 3 | -- | 10 | 30 | -- | -- | -- | -- | -- | -- |
| PMPO 4 | -- | -- | -- | 10 | 20 | 30 | -- | -- | -- |
| PMPO 5 | -- | -- | -- | -- | -- | -- | 10 | 20 | 30 |
| Water (distilled) | 4.3 | 4.3 | 4.3 | 4.3 | 4.3 | 4.3 | 4.3 | 4.3 | 4.3 |
| SURFACTANT 1 | 1.6 | 1.6 | 1.6 | 1.6 | 1.6 | 1.6 | 1.6 | 1.6 | 1.6 |
| Antioxidant | 0.3 | 0.3 | 0.3 | 0.3 | 0.3 | 0.3 | 0.3 | 0.3 | 0.3 |
| CATALYST 1 | 0.28 | 0.28 | 0.28 | 0.28 | 0.28 | 0.28 | 0.28 | 0.28 | 0.28 |
| INDEX (100 A/B) | 95 | 95 | 95 | 95 | 95 | 95 | 95 | 95 | 95 |
| % poly(oxyethylene) content | 55.3 | 53.5 | 49.9 | 53.8 | 52.4 | 51.0 | 54.2 | 53.1 | 52.1 |
| % Solid Polymer Particles | 0 | 2.5 | 7.5 | 1.9 | 3.8 | 5.8 | 1.4 | 2.9 | 4.3 |

| Physical Properties | | | | | | | | | |
|---|---|---|---|---|---|---|---|---|---|
| Density lb/ft³ (kg/m³) | 1.32 (21.1) | 1.36 (21.7) | 1.38 (22.0) | 1.36 (21.8) | 1.28 (20.4) | 1.35 (21.5) | 1.35 (21.5) | 1.32 (21.1) | 1.29 (20.6) |
| Airflow ft³/min (L/s) | >10 (4.7) | >10 (4.7) | >10 (4.7) | NA | NA | NA | NA | NA | NA |
| IFD 25% lb/50in² (N/323cm²) | 8.3 (36.7) | 7.9 (35.2) | 9.2 (40.7) | 8.1 (36.2) | 8.7 (38.6) | 9.1 (40.4) | 8.4 (37.3) | 8.7 (38.8) | 8.9 (39.5) |
| Return Val. @ 25% | 79.4 | 78.0 | 75.3 | 76.6 | 75.4 | 74.6 | 77.3 | 76.0 | 75.7 |
| % | | | | | | | | | |
| S.F. 65% / 25% | 2.0 | 2.0 | 2.0 | 2.1 | 2.1 | 2.1 | 2.0 | 2.0 | 2.0 |
| Tensile Strength psi (kPa) | 10 (68) | 9 (65) | 11 (78) | 10 (69) | 10 (70) | 10 (68) | 10 (69) | 10 (67) | 11 (75) |
| Elongation | 264 | 231 | 231 | 244 | 226 | 203 | 254 | 242 | 250 |
| % | | | | | | | | | |
| Tear Strength (20"/MIN-STDSP1) | 2.1 (364) | 1.8 (309) | 1.8 (331) | 1.7 (296) | 1.7 (296) | 1.9 (333) | 1.8 (309) | 1.8 (318) | 1.8 (323) |
| pli (N/m) | | | | | | | | | |
| 50% Compression Set | 4.4 | 6.8 | 9.1 | 7.0 | 8.5 | 9.3 | 6.0 | 7.1 | 8.4 |
| % | | | | | | | | | |
| 90% Compression Set | 5.6 | 7.3 | 9.8 | 7.4 | 8.3 | 9.2 | 8.0 | 8.0 | 9.3 |
| % | | | | | | | | | |
| HACS 75% | 7.1 | 13.1 | 13.7 | 11.8 | 12.9 | 13.0 | 12.1 | 12.3 | 15.8 |
| % | | | | | | | | | |
| Resilience | 39 | 39 | 37 | 37 | 35 | 35 | 37 | 37 | 34 |
| % | | | | | | | | | |

### Foam Examples 21-30

Flexible foams were produced using the formulations given in Table 2 (amounts are in parts by weight), in which POLYOL 1, POLYOL 2, PMPO 1, PMPO 2, PMPO 3, SURFACTANT 1, and CATALYST 1 are all as described above; CATALYST 2 refers to bis(2-dimethylaminoethyl) ether, commercially available as Niax^{™} catalyst A-1 from Momentive Performance Materials; and CATALYST 3 refers to stannous octoate-based catalyst, commercially available as Dabco^{™} T-9 from Evonik. In Foam Examples 21-30, the isocyanate used was an aromatic diisocyanate mixture of 80% 2,4 toluene diisocyanate and 20% 2,6 toluene diisocyanate, available from Covestro as Mondur^{®} TD 80. All foams were produced, sampled, and tested in the manner described above with respect to Examples 1-20. Examples 21 and 25-30 are comparative examples and Examples 22-24 are inventive examples.

**Table 2**

| Example | | | | | | | | | | |
|---|---|---|---|---|---|---|---|---|---|---|
| Chemical | 21 | 22 | 23 | 24 | 25 | 26 | 27 | 28 | 29 | 30 |
| POLYOL 1 | 75 | 65 | 55 | 45 | 75 | 75 | 70 | 75 | 65 | 55 |
| POLYOL 2 | 25 | 25 | 25 | 25 | 15 | 5 | -- | 25 | 25 | 25 |
| PMPO 1 | -- | 10 | 20 | 30 | -- | -- | -- | -- | -- | -- |
| PMPO 2 | -- | -- | -- | -- | 10 | 20 | 30 | -- | -- | -- |
| PMPO 3 | -- | -- | -- | -- | -- | -- | -- | -- | 10 | 20 |
| Water (distilled) | 2.0 | 2.0 | 2.0 | 2.0 | 2.0 | 2.0 | 2.0 | 2.0 | 2.0 | 2.0 |
| SURFACTANT 1 | 1.5 | 1.5 | 1.5 | 1.5 | 1.5 | 1.5 | 1.5 | 1.5 | 1.5 | 1.5 |
| Antioxidant | 0.3 | 0.3 | 0.3 | 0.3 | 0.3 | 0.3 | 0.3 | 0.3 | 0.3 | 0.3 |
| CATALYST 2 | 0.05 | 0.05 | 0.05 | 0.05 | 0.05 | 0.05 | 0.05 | 0.05 | 0.05 | 0.05 |
| CATALYST 1 | 0.29 | 0.29 | 0.29 | 0.29 | 0.29 | 0.29 | 0.29 | 0.29 | 0.29 | 0.29 |
| CATALYST 3 | 0.04 | 0.04 | 0.04 | 0.04 | 0.04 | 0.04 | 0.04 | 0.04 | 0.04 | 0.04 |
| INDEX (100 A/B) | 95 | 95 | 95 | 95 | 95 | 95 | 95 | 95 | 95 | 95 |
| % poly(oxyethylene) content | 55.3 | 53.5 | 51.7 | 49.9 | 54.5 | 53.8 | 49.9 | 55.3 | 53.5 | 51.7 |
| % Solid Polymer Particles | 0 | 2.5 | 5 | 7.5 | 4.9 | 9.8 | 14.7 | 0 | 2.5 | 5 |

| Physical Properties | | | | | | | | | | |
|---|---|---|---|---|---|---|---|---|---|---|
| Density lb/ft³ (kg/m³) | 2.76 (44.2) | 2.72 (43.6) | 2.79 (44.7) | 2.79 (44.6) | 2.69 (43.1) | 2.71 (43.3) | 2.70 (43.3) | 2.76 (44.2) | 2.79 (44.6) | 2.77 (44.4) |
| Airflow ft³/min (L/s) | 8.6 (4.1) | 9.0 (4.2) | 8.6 (4.1) | 8.4 (4.0) | 8.4 (4.0) | 4.7 (2.2) | 5.6 (2.6) | 8.6 (4.1) | 8.5 (4.0) | 8.4 (4.0) |
| IFD 25% lb/50in² (N/323cm²) | 20.8 (92.7) | 26.4 (117.6) | 29.5 (131.1) | 32.2 (143.1) | 21.1 (93.6) | 33.9 (150.7) | 27.1 (120.5) | 20.8 (92.7) | 21.7 (96.4) | 22.3 (99.4) |
| Return Val. @ 25% | 85.1 | 83.2 | 83.3 | 82.1 | 84.5 | 83.0 | 84.0 | 85.1 | 84.4 | 84.6 |
| % | | | | | | | | | | |
| S.F. 65% / 25% | 2.1 | 2.0 | 2.0 | 2.0 | 2.0 | 2.0 | 2.3 | 2.1 | 2.1 | 2.1 |
| Tensile Strength psi (kPa) | 9 (64) | 9 (61) | 11 (73) | 11 (76) | 9 (60) | 7 (47) | 9 (62) | 9 (64) | 11 (78) | 12 (85) |
| Elongation | 249 | 178 | 184 | 169 | 202 | 112 | 142 | 249 | 258 | 255 |
| % | | | | | | | | | | |
| Tear Strength (20"/MIN-STDSP1) | 2.3 (406) | 2.0 (351) | 1.7 (304) | 1.8 (318) | 1.9 (334) | 1.0 (172) | 1.2 (211) | 2.3 (406) | 2.0 (357) | 2.1 (372) |
| pli (N/m) | | | | | | | | | | |
| 50% Compression Set | 1.9 | 2.0 | 2.0 | 2.2 | 1.9 | 1.7 | 1.7 | 1.9 | 1.7 | 2.1 |
| % | | | | | | | | | | |
| 90% Compression Set | 2.4 | 2.7 | 3.7 | 4.5 | 2.6 | 2.5 | 2.9 | 2.4 | 2.9 | 2.7 |
| % | | | | | | | | | | |
| HACS 75% | 5.4 | 5.0 | 4.5 | 4.5 | 4.6 | 4.2 | 4.1 | 5.4 | 4.8 | 5.2 |
| % | | | | | | | | | | |
| Resilience | 52 | 52 | 53 | 50 | 52 | 53 | 53 | 52 | 52 | 50 |
| % | | | | | | | | | | |

### Foam Examples 31-48

Flexible foams were produced using the formulations given in Table 3 (amounts are in parts by weight), in which POLYOL 1, PMPO 1, PMPO 2, PMPO 3, SURFACTANT 1, CATALYST 1, CATALYST 2, and CATALYST 3 are all as described above; POLYOL 3 refers to a polyether polyol having a hydroxyl number of 95.8-103.8 mg KOH/g and a poly(oxyethylene) content of less than 30% by weight; PMPO 6 refers to a PMPO, a 10% solids S:AN dispersion in a carrier polyether polyol having a hydroxyl number of 28-32 mg KOH/g and a poly(oxyethylene) content of less than 20% by weight; and SURFACTANT 2 refers to Niax^{™} 618 from Momentive Performance Materials. In Foam Examples 31-48, the isocyanate used was an aromatic diisocyanate mixture of 80% 2,4 toluene diisocyanate and 20% 2,6 toluene diisocyanate, available from Covestro as Mondur^{®} TD 80. All the foams were produced, sampled, and tested in the manner described above with respect to Examples 1-20. Examples 31 and 37-48 are comparative examples and Examples 32-36 are inventive examples.

**Table 3**

| | Example | | | | | | | | | | |
|---|---|---|---|---|---|---|---|---|---|---|---|
| Chemical | 31 | 32 | 33 | 34 | 35 | 36 | 37 | 38 | 39 | 40 | 41 |
| POLYOL 1 | 60 | 50 | 40 | 30 | 15 | -- | 60 | 60 | 60 | 60 | 50 |
| POLYOL 3 | 30 | 30 | 30 | 30 | 30 | 30 | 30 | 20 | 10 | -- | -- |
| PMPO 6 | 10 | 10 | 10 | 10 | 10 | 10 | 10 | 10 | 10 | 10 | 10 |
| PMPO 1 | -- | 10 | 20 | 30 | 45 | 60 | -- | -- | -- | -- | -- |
| PMPO 2 | -- | -- | -- | -- | -- | -- | -- | 10 | 20 | 30 | 40 |
| Water (distilled) | 4.3 | 4.3 | 4.3 | 4.3 | 4.3 | 4.3 | 4.3 | 4.3 | 4.3 | 4.3 | 4.3 |
| SURFACTANT 2 | 1.7 | 1.7 | 1.7 | 1.7 | 1.7 | 1.7 | 1.7 | 1.7 | 1.7 | 1.7 | 1.7 |
| Antioxidant | 0.3 | 0.3 | 0.3 | 0.3 | 0.3 | 0.3 | 0.3 | 0.3 | 0.3 | 0.3 | 0.3 |
| CATALYST 1 | 0.18 | 0.18 | 0.18 | 0.18 | 0.18 | 0.18 | 0.18 | 0.18 | 0.18 | 0.18 | 0.18 |
| CATALYST 2 | 0.04 | 0.04 | 0.04 | 0.04 | 0.04 | 0.04 | 0.04 | 0.04 | 0.04 | 0.04 | 0.04 |
| CATALYST 3 | 0.12 | 0.12 | 0.12 | 0.12 | 0.12 | 0.12 | 0.12 | 0.12 | 0.12 | 0.12 | 0.12 |
| INDEX (100 A/B) | 95 | 95 | 95 | 95 | 95 | 95 | 95 | 95 | 95 | 95 | 95 |
| % poly(oxyethylene) content | 48.3 | 46.5 | 44.7 | 42.9 | 40.3 | 37.6 | 48.3 | 46.4 | 44.6 | 42.7 | 35.6 |
| % Solid Polymer Particles | 1.03 | 3.53 | 6.03 | 8.53 | 12.28 | 16.03 | 1.03 | 5.93 | 10.83 | 15.73 | 20.63 |

| Physical Properties | | | | | | | | | | | |
|---|---|---|---|---|---|---|---|---|---|---|---|
| Density lb/ft³ (kg/m³) | 1.36 (21.7) | 1.36 (21.7) | 1.34 (21.5) | 1.35 (21.5) | 1.29 (20.7) | 1.38 (22.1) | 1.36 (21.7) | 1.37 (21.9) | 1.22 (19.5) | 1.39 (22.2) | 1.40 (22.4) |
| Airflow ft³/min (L/s) | 7.4 (3.5) | 6.7 (3.2) | 8.0 (3.8) | 8.3 (3.9) | 7.9 (3.7) | 6.5 (3.1) | 7.4 (3.5) | 8.4 (4.0) | 4.4 (2.1) | 6.1 (2.9) | 5.5 (2.6) |
| IFD 25% lb/50in² (N/323cm²) | 10.9 (48.3) | 12.2 (54.3) | 13.6 (60.5) | 15.9 (70.7) | 16.2 (72.0) | 20.8 (92.3) | 10.9 (48.3) | 11.9 (52.9) | 18.7 (83.3) | 20.6 (91.8) | 24.8 (110.4) |
| Return Val. @ 25% % | 72.8 | 71.6 | 70.9 | 68.8 | 66.5 | 63.0 | 72.8 | 73.2 | 68.2 | 72.3 | 70.9 |
| S.F. 65% / 25% | 2.1 | 2.0 | 2.0 | 2.0 | 2.0 | 2.0 | 2.1 | 2.0 | 2.0 | 1.9 | 2.0 |
| Tensile Strength psi (kPa) | 11 (77) | 13 (86) | 10 (72) | 11 (73) | 11 (74) | 12 (86) | 11 (77) | 14 (95) | 7 (50) | 12 (81) | 13 (88) |
| Elongation % | 263 | 306 | 216 | 201 | 190 | 165 | 263 | 345 | 119 | 154 | 127 |
| Tear Strength (20"/MIN-STDSP1) pli (N/m) | 2.2 (392) | 2.1 (376) | **1.8** (322) | 1.9 (327) | 1.8 (318) | 2.0 (346) | 2.2 (392) | 2.2 (394) | 1.3 (219) | **1.4** (239) | 1.6 (278) |
| 50% Compression Set % | 6.3 | 7.6 | 7.3 | 7.6 | 11.5 | 22.9 | 6.3 | 6.0 | 5.7 | 5.0 | 6.0 |
| 90% Compression Set % | 21.5 | 27.7 | 24.8 | 28.0 | 35.5 | 45.6 | 21.5 | 11.3 | 9.5 | 13.7 | 14.7 |
| HACS 75% % | 13.8 | 14.3 | 10.7 | 10.5 | 20.6 | 32.7 | 13.8 | 10.1 | 7.2 | 9.5 | 9.9 |
| Resilience % | 32 | 30 | 29 | 28 | 26 | 24 | 32 | 35 | 30 | 37 | 38 |

**Table 3 (continued)**

| | | | | | Example | | | | | | |
|---|---|---|---|---|---|---|---|---|---|---|---|
| Chemical | | | | | 42 | 43 | 44 | 45 | 46 | 47 | 48 |
| POLYOL 1 | | | | | 60 | 50 | 40 | 30 | 50 | 40 | 30 |
| POLYOL 3 | | | | | 30 | 30 | 30 | 30 | 30 | 30 | 30 |
| PMPO 6 | | | | | 10 | 10 | 10 | 10 | 10 | 10 | 10 |
| PMPO 4 | | | | | -- | 10 | 20 | 30 | -- | -- | -- |
| PMPO 5 | | | | | -- | -- | -- | -- | 10 | 20 | 30 |
| Water (distilled) | | | | | 4.3 | 4.3 | 4.3 | 4.3 | 4.3 | 4.3 | 4.3 |
| SURFACTANT 2 | | | | | 1.7 | 1.7 | 1.7 | 1.7 | 1.7 | 1.7 | 1.7 |
| Antioxidant | | | | | 0.3 | 0.3 | 0.3 | 0.3 | 0.3 | 0.3 | 0.3 |
| CATALYST 1 | | | | | 0.18 | 0.18 | 0.18 | 0.18 | 0.18 | 0.18 | 0.18 |
| CATALYST 2 | | | | | 0.04 | 0.04 | 0.04 | 0.04 | 0.04 | 0.04 | 0.04 |
| CATALYST 3 | | | | | 0.12 | 0.12 | 0.12 | 0.12 | 0.12 | 0.12 | 0.12 |
| INDEX (100 A/B) | | | | | 95 | 95 | 95 | 95 | 95 | 95 | 95 |
| % poly(oxyethylene) content | | | | | 48.3 | 46.9 | 45.4 | 44.0 | 47.2 | 46.1 | 45.1 |
| % Solid Polymer Particles | | | | | 1.03 | 2.95 | 4.87 | 6.79 | 2.46 | 3.89 | 5.32 |

| Physical Properties | | | | | | | | | | | |
|---|---|---|---|---|---|---|---|---|---|---|---|
| Density lb/ft³ (kg/m³) | | | | | 1.36 (21.7) | 1.38 (22.1) | 1.37 (22.0) | 1.42 (22.8) | 1.37 (21.9) | 1.40 (22.4) | 1.37 (21.9) |

| | | | | | | | | | | | |
|---|---|---|---|---|---|---|---|---|---|---|---|
| Airflow ft³/min (L/s) | | 7.4 (3.5) | | 9.4 (4.4) | | 9.0 (4.2) | | 8.4 (4.0) | 9.5 (4.5) | 9.4 (4.4) | 9.4 (4.4) |
| IFD 25% lb/50in² (N/323cm²) | | 10.9 (48.3) | | 11.4 (50.7) | | 11.9 (52.9) | | 12.2 (54.2) | 11.2 (50.0) | 11.7 (51.8) | 12.1 (53.7) |
| Return Val. @ 25% % | | 72.8 | | 72.4 | | 71.4 | | 70.0 | 72.8 | 72.1 | 70.6 |
| S.F. 65% / 25% | | 2.1 | | 2.0 | | 2.0 | | 2.0 | 2.0 | 2.0 | 1.9 |
| Tensile Strength psi (kPa) | | 11 (77) | | 14 (95) | | 15 (103) | | **14** (99) | 14 (94) | 13 (88) | 15 (100) |
| Elongation % | | 263 | | 336 | | 351 | | 325 | 344 | 301 | 338 |
| Tear Strength (20"/MIN-STDSP1) pli (N/m) | | 2.2 (392) | | 1.9 (340) | | 2.1 (362) | | 2.0 (350) | 1.9 (334) | 2.0 (343) | 2.1 (365) |
| 50% Compression Set % | | 6.3 | | 5.4 | | 6.0 | | 7.2 | 5.0 | 5.5 | 6.2 |
| 90% Compression Set % | | 21.5 | | 7.9 | | 8.7 | | 10.5 | 7.4 | 8.2 | 8.9 |
| HACS 75% % | | 13.8 | | 11.1 | | 11.9 | | 13.2 | 10.5 | 10.9 | 11.8 |
| Resilience % | | 32 | | 33 | | 32 | | 30 | 33 | 32 | 32 |

### Foam Examples 49-54

Flexible foams were produced using the formulations given in Table 4 (amounts are in parts by weight), in which POLYOL 1, POLYOL 3, PMPO 6, PMPO 1, PMPO 2, SURFACTANT 1, CATALYST 1, CATALYST 2, and CATALYST 3 are all as described above. In Foam Examples 49-54, the isocyanate used was an aromatic diisocyanate mixture of 80% 2,4 toluene diisocyanate and 20% 2,6 toluene diisocyanate, available from Covestro as Mondur^{®} TD 80. All foams were produced, sampled, and tested in the manner described above with respect to Examples 1-20. Examples 49 and 52-54 are comparative examples and Examples 50-51 are inventive examples.

**Table 4**

| | Example | | | | | |
|---|---|---|---|---|---|---|
| Chemical | 49 | 50 | 51 | 52 | 53 | 54 |
| POLYOL 1 | 60 | 50 | 40 | 60 | 60 | 60 |
| POLYOL 3 | 30 | 30 | 30 | 20 | 10 | -- |
| PMPO 6 | 10 | 10 | 10 | 10 | 10 | 10 |
| PMPO 1 | -- | 10 | 20 | -- | -- | -- |
| PMPO 2 | -- | -- | -- | 10 | 20 | 30 |
| Water (distilled) | 2.1 | 2.1 | 2.1 | 2.1 | 2.1 | 2.1 |
| SURFACTANT 1 | 1.7 | 1.7 | 1.7 | 1.7 | 1.7 | 1.7 |
| Antioxidant | 0.3 | 0.3 | 0.3 | 0.3 | 0.3 | 0.3 |
| CATALYST 2 | 0.1 | 0.1 | 0.1 | 0.1 | 0.1 | 0.1 |
| CATALYST 1 | 0.18 | 0.18 | 0.18 | 0.18 | 0.18 | 0.18 |
| CATALYST 3 | 0.12 | 0.12 | 0.12 | 0.12 | 0.12 | 0.12 |
| INDEX (100 A/B) | 95 | 95 | 95 | 95 | 95 | 95 |
| % poly(oxyethylene) content | 48.3 | 46.5 | 44.7 | 46.4 | 44.6 | 42.7 |
| % Solid Polymer Particles | 1.03 | 3.53 | 6.03 | 5.93 | 10.83 | 15.73 |

| Physical Properties | | | | | | |
|---|---|---|---|---|---|---|
| Density lb/ft³ (kg/m³) | 2.70 (43.3) | 2.66 (42.5) | 2.67 (42.7) | 2.74 (43.9) | 2.81 (44.9) | 2.83 (45.3) |
| Airflow ft³/min (L/s) | 6.2 (2.9) | 6.7 (3.2) | 6.6 (3.1) | 3.9 (1.8) | 3.1 (1.4) | 3.3 (1.6) |
| IFD 25% lb/50in² (N/323cm²) | 12.6 (56.1) | 16.9 (75.3) | 20.4 (90.7) | 15.7 (70.0) | 21.9 (97.4) | 31.0 (137.7) |
| **Return** Val. @ 25% % | 86.2 | 84.9 | 83.7 | 85.1 | 84.6 | 83.3 |
| S.F. 65% / 25% | 2.2 | 2.1 | 2.0 | 2.2 | 2.2 | 2.2 |
| Tensile Strength psi (kPa) | 13 (89) | 12 (80) | 10 (70) | 13 (60) | 13 (86) | 10 (69) |
| Elongation % | 378 | 278 | 208 | 335 | 211 | 108 |
| Tear Strength (20"/MIN-STDSP1) pli (N/m) | 1.9 (330) | 1.8 (311) | 1.8 (306) | 2.2 (383) | 2.2 (377) | 1.0 (168) |
| 50% Compression Set % | 3.3 | 2.6 | 3.0 | 2.6 | 2.3 | 2.0 |
| 90% Compression Set % | 4.9 | 7.1 | 5.3 | 5.3 | 5.3 | 5.7 |
| HACS 75% % | 6.9 | 5.8 | 5.3 | 6.5 | 6.5 | 5.7 |
| Resilience % | 48 | 46 | 44 | 45 | 47 | 48 |

### Foam Examples 55-63

Flexible foams were produced using the formulations given in Table 5 (amounts are in parts by weight), in which POLYOL 1, POLYOL 3, PMPO 6, PMPO 1, PMPO 2, SURFACTANT 1, CATALYST 1, CATALYST 2, and CATALYST 3 are all as described above; and SURFACTANT 3: Alkyl-pendant organosilicone, commercially available as Niax^{™} Silicone L-635 from Momentive Performance Materials. In Foam Examples 55-63, the isocyanate used was an aromatic diisocyanate mixture of 80% 2,4 toluene diisocyanate and 20% 2,6 toluene diisocyanate, available from Covestro as Mondur^{®} TD 80. All foams were produced, sampled, and tested in the manner described above with respect to Examples 1-20. Examples 55 and 59-63 are comparative examples and Examples 56-58 are inventive examples.

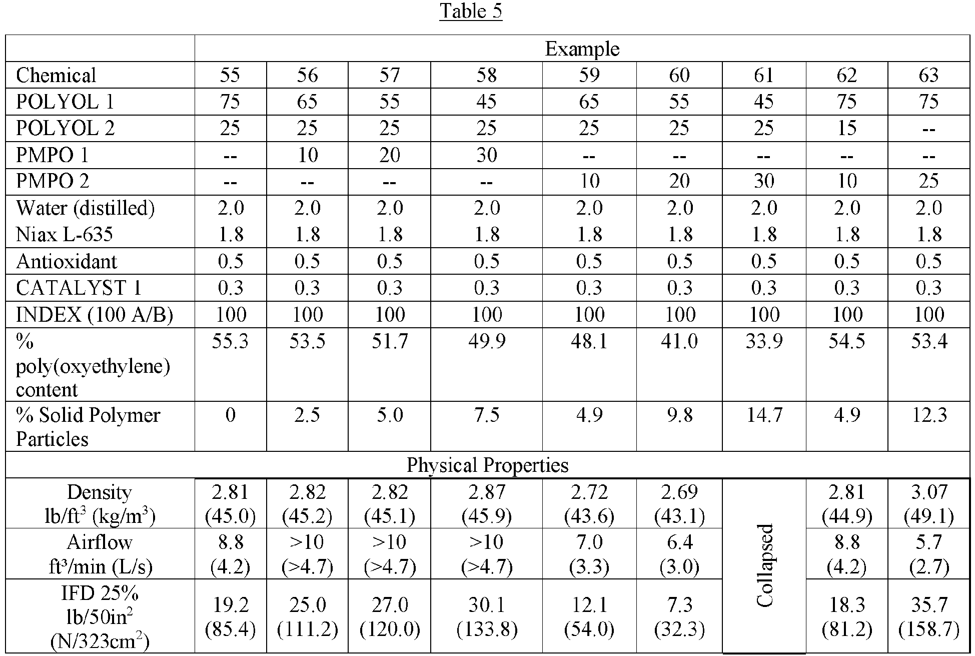

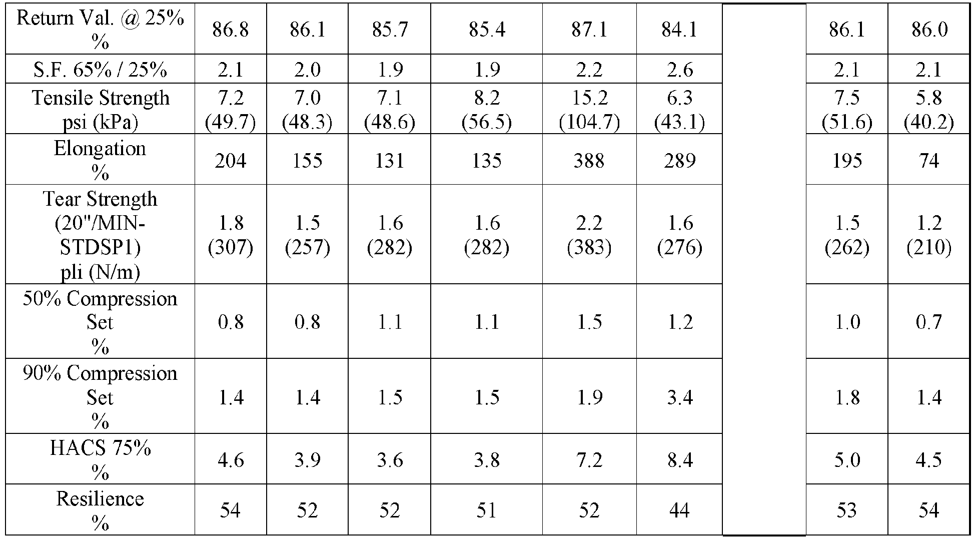

### Foam Examples 64-72

Flexible foams were produced using the formulations given in Table 6 (amounts are in parts by weight), in which POLYOL 1, PMPO 1, PMPO 2, SURFACTANT 2, CATALYST 1, and CATALYST 3 are all as described above; POLYOL 4 refers to a polyether polyol having a hydroxyl number of 116-124 mg KOH/g and a poly(oxyethylene) content of less than 30% by weight; POLYOL 5 refers to a polyether polyol prepared using 85% by weight PO and 15% by weight EO as the alkylene oxide and glycerin as OH functional starter, having a functionality of 3, an OH number of 26-30 mg KOH/g polyol, and 80-90 mol % primary OH. In Foam Examples 64-72, the isocyanate used was an aromatic diisocyanate mixture of 80% 2,4 toluene diisocyanate and 20% 2,6 toluene diisocyanate, available from Covestro as Mondur^{®} TD 80. All the foams were produced, sampled, and tested in the manner described above with respect to Examples 1-20. Examples 64 and 69-72 are comparative examples and Examples 65-68 are inventive examples.

**Table 6**

| | Example | | | | | | | | |
|---|---|---|---|---|---|---|---|---|---|
| Chemical | 64 | 65 | 66 | 67 | 68 | 69 | 70 | 71 | 72 |
| POLYOL 4 | 60 | 50 | 40 | 30 | 20 | 50 | 40 | 30 | 20 |
| POLYOL 5 | 10 | 10 | 10 | 10 | 10 | 10 | 10 | 10 | 10 |
| POLYOL 1 | 30 | 30 | 30 | 30 | 30 | 30 | 30 | 30 | 30 |
| PMPO 1 | -- | 10 | 20 | 30 | 40 | -- | -- | -- | -- |
| PMPO 2 | -- | -- | -- | -- | -- | 10 | 20 | 30 | 40 |
| Water (distilled) | 3.7 | 3.7 | 3.7 | 3.7 | 3.7 | 3.7 | 3.7 | 3.7 | 3.7 |
| SURFACTANT 2 | 2.0 | 2.0 | 2.0 | 2.0 | 2.0 | 2.0 | 2.0 | 2.0 | 2.0 |
| Antioxidant | 0.25 | 0.25 | 0.25 | 0.25 | 0.25 | 0.25 | 0.25 | 0.25 | 0.25 |
| CATALYST 1 | 0.30 | 0.30 | 0.30 | 0.30 | 0.30 | 0.30 | 0.30 | 0.30 | 0.30 |
| CATALYST 3 | 0.05 | 0.05 | 0.05 | 0.05 | 0.05 | 0.05 | 0.05 | 0.05 | 0.05 |
| INDEX (100 A/B) | 100 | 100 | 100 | 100 | 100 | 100 | 100 | 100 | 100 |
| % poly(oxyethylene) content | 33.8 | 37.3 | 40.8 | 44.3 | 47.9 | 32.0 | 30.1 | 28.3 | 26.5 |
| % Solid Polymer Particles | 0 | 2.5 | 5.0 | 7.5 | 10.0 | 4.9 | 9.8 | 14.7 | 19.6 |

| Physical Properties | | | | | | | | | |
|---|---|---|---|---|---|---|---|---|---|
| Density lb/ft³ (kg/m³) | 1.53 (24.5) | 1.51 (24.2) | 1.54 (24.6) | 1.53 (24.4) | 1.55 (24.7) | 1.54 (24.6) | 1.58 (25.3) | 1.61 (25.7) | 1.53 (24.5) |
| Airflow ft³/min (L/s) | 9.0 (4.2) | 8.5 (4.0) | 8.2 (3.9) | 6.9 (3.3) | 8.5 (4.0) | 7.0 (3.3) | 6.2 (2.9) | 5.5 (2.6) | 5.2 (2.4) |
| IFD 25% lb/50in² (N/323cm²) | 7.0 (31.0) | 8.8 (39.2) | 11.0 (48.8) | 13.4 (59.5) | 14.7 (65.2) | 8.9 (39.8) | 10.9 (48.4) | 13.7 (60.9) | 17.3 (76.8) |
| Return Val. @ 25% % | 70.1 | 67.4 | 63.8 | 58.3 | 59.9 | 68.0 | 68.1 | 68.7 | 68.7 |
| S.F. 65% / 25% | 2.1 | 2.1 | 2.1 | 2.2 | 2.1 | 2.2 | 2.2 | 2.3 | 2.6 |
| Tensile Strength psi (kPa) | 12 (81) | 10 (67) | 15 (102) | 15 (103) | 15 (104) | 13 (92) | 12 (81) | 11 (78) | 17 (117) |
| Elongation % | 243 | 167 | 216 | 186 | 184 | 249 | 184 | 140 | 158 |
| Tear Strength (20"/MIN-STDSP1) pli (N/m) | 1.8 (311) | 1.7 (298) | 1.6 (289) | 1.7 (304) | 1.6 (277) | 1.9 (327) | 1.6 (284) | 1.4 (247) | 1.7 (294) |
| 50% Compression Set % | 8.2 | 10.1 | 13.3 | 26.3 | 25.4 | 12.8 | 13.8 | 14.2 | 13.2 |
| 90% Compression Set % | 14.6 | 16.7 | 20.4 | 43.1 | 38.3 | 22.6 | 33.6 | 38.3 | 36.4 |
| HACS 75% % | 11.1 | 12.5 | 15.1 | 27.4 | 26.0 | 14.9 | 19.8 | 20.4 | 21.9 |
| Resilience % | 20 | 18 | 18 | 17 | 18 | 23 | 26 | 30 | 35 |

### Foam Examples 73-81

Flexible foams were produced using the formulations given in Table 7 (amounts are in parts by weight), in which POLYOL 1, POLYOL 4, POLYOL 5, PMPO 1, PMPO 2, CATALYST 1, SURFACTANT 2, and CATALYST 3 are all as described above. In Foam Examples 73-81, the isocyanate used was an aromatic diisocyanate mixture of 80% 2,4 toluene diisocyanate and 20% 2,6 toluene diisocyanate, available from Covestro as Mondur^{®} TD 80. All the foams were produced, sampled, and tested in the manner described above with respect to Examples 1-20. Examples 73 and 78-81 are comparative examples and Examples 74-77 are inventive examples.

**Table 7**

| | Example | | | | | | | | |
|---|---|---|---|---|---|---|---|---|---|
| Chemical | 73 | 74 | 75 | 76 | 77 | 78 | 79 | 80 | 81 |
| POLYOL 4 | 60 | 50 | 40 | 30 | 20 | 50 | 40 | 30 | 20 |
| POLYOL 5 | 10 | 10 | 10 | 10 | 10 | 10 | 10 | 10 | 10 |
| POLYOL 1 | 30 | 30 | 30 | 30 | 30 | 30 | 30 | 30 | 30 |
| PMPO 1 | -- | 10 | 20 | 30 | 40 | -- | -- | -- | -- |
| PMPO 2 | -- | -- | -- | -- | -- | 10 | 20 | 30 | 40 |
| Water (distilled) | 2.25 | 2.25 | 2.25 | 2.25 | 2.25 | 2.25 | 2.25 | 2.25 | 2.25 |
| SURFACTANT 2 | 1.8 | 1.8 | 1.8 | 1.8 | 1.8 | 1.8 | 1.8 | 1.8 | 1.8 |
| Antioxidant | 0.2 | 0.2 | 0.2 | 0.2 | 0.2 | 0.2 | 0.2 | 0.2 | 0.2 |
| CATALYST 1 | 0.35 | 0.35 | 0.35 | 0.35 | 0.35 | 0.35 | 0.35 | 0.35 | 0.35 |
| CATALYST 3 | 0.07 | 0.07 | 0.07 | 0.07 | 0.07 | 0.07 | 0.07 | 0.07 | 0.07 |
| INDEX (100 A/B) | 100 | 100 | 100 | 100 | 100 | 100 | 100 | 100 | 100 |
| % poly(oxyethylene) content | 33.7 | 37.3 | 40.8 | 44.3 | 47.9 | 32.0 | 30.1 | 28.3 | 26.5 |
| % Solid Polymer Particles | 0 | 2.5 | 5.0 | 7.5 | 10.0 | 4.9 | 9.8 | 14.7 | 19.6 |

| Physical Properties | | | | | | | | | |
|---|---|---|---|---|---|---|---|---|---|
| Density lb/ft³ (kg/m³) | 2.33 (37.3) | 2.36 (37.8) | 2.38 (38.0) | 2.34 (37.4) | 2.34 (37.5) | 2.47 (39.5) | 2.52 (40.4) | 2.66 (42.5) | 2.61 (41.8) |
| Airflow ft³/min (L/s) | 6.8 (3.2) | 5.9 (2.8) | 5.4 (2.5) | 4.6 (2.2) | 5.6 (2.7) | 5.0 (2.4) | 3.6 (1.7) | 2.5 (1.2) | 2.0 (0.9) |
| IFD 25% lb/50in² (N/323cm²) | 5.6 (24.7) | 7.7 (34.4) | 9.7 (43.3) | 9.6 (42.6) | 13.3 (59.3) | 7.0 (31.1) | 9.0 (39.9) | 12.8 (57.0) | 17.2 (76.3) |
| **Return** Val. @ 25% % | 84.7 | 84.4 | 82.8 | 81.0 | 81.9 | 82.8 | 82.4 | 81.9 | 80.7 |
| S.F. 65% / 25% | 2.4 | 2.3 | 2.3 | 2.4 | 2.2 | 2.5 | 2.6 | 2.8 | 2.9 |
| Tensile Strength psi (kPa) | 6 (40) | 11 (77) | 14 (94) | 13 (88) | 13 (89) | 8 (57) | 10 (67) | 11 (76) | 11 (78) |
| Elongation (%) | 224 | 267 | 257 | 228 | 216 | 254 | 232 | 181 | 136 |
| Tear Strength (20"/MIN-STDSP1) pli (N/m) | 1.4 (243) | 1.4 (241) | 1.4 (240) | **1.4** (238) | 1.3 (236) | 1.3 (232) | 1.4 (251) | 1.3 (229) | 1.0 (173) |
| 50% Compression Set % | 5.1 | 3.6 | 4.6 | 4.7 | 3.9 | 6.1 | 7.1 | 7.2 | 7.1 |
| 90% Compression Set % | 6.6 | 5.7 | 6.2 | 6.6 | 5.5 | 8.2 | 9.9 | 8.7 | 8.0 |
| HACS 75% % | 8.8 | 6.3 | 6.4 | 7.1 | 6.1 | 9.6 | 10.7 | 9.8 | 9.7 |
| Resilience % | 22 | 22 | 18 | 17 | 20 | 26 | 30 | 35 | 40 |

### Foam Examples 82-90

Flexible foams were produced using the formulations given in Table 8 (amounts are in parts by weight), in which POLYOL 1, POLYOL 2, PMPO 1, PMPO 2, CATALYST 1, and CATALYST 2 are all as described above, and STABILIZER 1 refers to a silicone stabilizer commercially available as Niax^{™} Silicone L-417 from Momentive Performance Materials. In Foam Examples 82-90, the isocyanate used was a polymeric diphenylmethane diisocyanate having an NCO content of 32.0-33.5 wt%, available from Covestro as Mondur^{®} 3694. All the foams were produced, sampled, and tested in the manner described above with respect to Examples 1-20. Examples 82 and 86-90 are comparative examples and Examples 83-85 are inventive examples.

**Table 8**

| | Example | | | | | | | | |
|---|---|---|---|---|---|---|---|---|---|
| Chemical | 82 | 83 | 84 | 85 | 86 | 87 | 88 | 89 | 90 |
| POLYOL 1 | 75 | 65 | 55 | 45 | 65 | 55 | 45 | 75 | 75 |
| POLYOL 2 | 25 | 25 | 25 | 25 | 25 | 25 | 25 | 15 | -- |
| PMPO 1 | -- | 10 | 20 | 30 | -- | -- | -- | -- | -- |
| PMPO 2 | -- | -- | -- | -- | 10 | 20 | 30 | 10 | 25 |
| Water (distilled) | 2.2 | 2.2 | 2.2 | 2.2 | 2.2 | 2.2 | 2.2 | 2.2 | 2.2 |
| STABILIZER 1 | 0.8 | 0.8 | 0.8 | 0.8 | 0.8 | 0.8 | 0.8 | 0.8 | 0.8 |
| CATALYST 2 | 0.16 | 0.16 | 0.16 | 0.16 | 0.16 | 0.16 | 0.16 | 0.16 | 0.16 |
| CATALYST 1 | 0.15 | 0.15 | 0.15 | 0.15 | 0.15 | 0.15 | 0.15 | 0.15 | 0.15 |
| INDEX (100 A/B) | 90 | 90 | 90 | 90 | 90 | 90 | 90 | 90 | 90 |
| % poly(oxyethylene) content | 55.3 | 53.5 | 51.7 | 49.9 | 48.1 | 41.0 | 33.9 | 54.5 | 53.4 |
| % Solid Polymer Particles | 0 | 2.5 | 5.0 | 7.5 | 4.9 | 9.8 | 14.7 | 4.9 | 12.3 |

| Physical Properties | | | | | | | | | |
|---|---|---|---|---|---|---|---|---|---|
| Density lb/ft³ (kg/m³) | 2.71 (43.3) | 2.84 (45.5) | 2.92 (46.8) | 2.94 (47.1) | 2.66 (42.5) | 2.65 (42.4) | 2.76 (44.1) | 2.69 (43.0) | 3.0 (48.0) |
| Airflow ft³/min (L/s) | 0.0 (0.0) | 0.0 (0.0) | 0.0 (0.0) | 0.0 (0.0) | 0.0 (0.0) | 0.1 (0.1) | 0.7 (0.3) | 0.0 (0.0) | 0.0 (0.0) |
| IFD 25% lb/50in² (N/323cm²) | 16.7 (74.2) | 18.9 (84.2) | 20.0 (89.0) | 20.3 (90.3) | 17.2 (76.5) | 15.3 (68.1) | 10.5 (46.8) | 16.6 (73.9) | **15.0** (66.9) |
| Return Val. @ 25% % | 89.6 | 90.0 | 89.9 | 88.9 | 86.1 | 78.0 | 65.4 | 90.4 | 91.3 |
| S.F. 65% / 25% | 1.9 | 1.9 | 2.0 | 2.1 | 2.0 | 2.1 | 2.5 | 2.0 | 2.2 |
| Tensile Strength psi (kPa) | 5 (32) | 6 (38) | 7 (51) | 8 (53) | 6 (38) | 6 (39) | 4 (28) | 4 (29) | 5 (32) |
| Elongation (%) | 118 | 115 | 115 | 103 | 118 | 101 | 70 | 103 | 85 |
| Tear Strength (20"/MIN-STDSP1) pli (N/m) | 0.5 (91) | 0.6 (108) | 0.7 (115) | 0.8 (135) | 0.5 (95) | 0.7 (119) | 0.6 (113) | 0.5 (81) | 0.5 (90) |
| 50% Compression Set % | 0.6 | 0.5 | 1.0 | 1.1 | 0.0 | 0.7 | 3.4 | 0.0 | 0.5 |
| 90% Compression Set % | 0.3 | 1.1 | 0.6 | 1.2 | 0.5 | 0.7 | 4.9 | 0.8 | 0.5 |
| HACS 75% % | 0.6 | 0.7 | 1.2 | 1.4 | 1 | 1.5 | 5.3 | 0.6 | 1.1 |
| Resilience % | 18 | 19 | 18 | 14 | 11 | 9 | 11 | 14 | 16 |

### Foam Examples 91-99

Flexible foams were produced using the formulations given in Table 9 (amounts are in parts by weight), in which POLYOL 1, POLYOL 2, PMPO 1, PMPO 2, CATALYST 1, CATALYST 2, and STABILIZER 1 are all as described above. In Foam Examples 91-99, the isocyanate used was an aromatic diisocyanate mixture of 80% 2,4 toluene diisocyanate and 20% 2,6 toluene diisocyanate, available from Covestro as Mondur^{®} TD 80. All the foams were produced, sampled, and tested in the manner described above with respect to Examples 1-20. Examples 91 and 95-99 are comparative examples and Examples 92-94 are inventive examples.

**Table 9**

| | Example | | | | | | | | |
|---|---|---|---|---|---|---|---|---|---|
| Chemical | 91 | 92 | 93 | 94 | 95 | 96 | 97 | 98 | 99 |
| POLYOL 1 | 80 | 70 | 60 | 50 | 70 | 60 | 50 | 80 | 80 |
| POLYOL 2 | 20 | 20 | 20 | 20 | 20 | 20 | 20 | 10 | -- |
| PMPO 1 | -- | 10 | 20 | 30 | -- | -- | -- | -- | -- |
| PMPO 2 | -- | -- | -- | -- | 10 | 20 | 30 | 10 | 20 |
| Water (distilled) | 1.9 | 1.9 | 1.9 | 1.9 | 1.9 | 1.9 | 1.9 | 1.9 | 1.9 |
| Diethanolamine-LF | 2 | 2 | 2 | 2 | 2 | 2 | 2 | 2 | 2 |
| STABILIZER 1 | 0.5 | 0.5 | 0.5 | 0.5 | 0.5 | 0.5 | 0.5 | 0.5 | 0.5 |
| Antioxidant | 0.3 | 0.3 | 0.3 | 0.3 | 0.3 | 0.3 | 0.3 | 0.3 | 0.3 |
| CATALYST 2 | 0.11 | 0.11 | 0.11 | 0.11 | 0.11 | 0.11 | 0.11 | 0.11 | 0.11 |
| CATALYST 1 | 0.15 | 0.15 | 0.15 | 0.15 | 0.15 | 0.15 | 0.15 | 0.15 | 0.15 |
| INDEX (100 A/B) | 90 | 90 | 90 | 90 | 90 | 90 | 90 | 90 | 90 |
| % poly(oxyethylene) content | 58.4 | 56.7 | 54.9 | 53.1 | 51.3 | 44.2 | 37.1 | 57.7 | 57.0 |
| % Solid Polymer Particles | 0 | 2.5 | 5.0 | 7.5 | 4.9 | 9.8 | 14.7 | 4.9 | 9.8 |

| Physical Properties | | | | | | | | | |
|---|---|---|---|---|---|---|---|---|---|
| Density lb/ft³ (kg/m³) | 2.52 (40.4) | 2.48 (39.7) | 2.52 (40.3) | 2.58 (41.2) | 2.53 (40.4) | 2.48 (39.7) | 2.43 (38.8) | 2.60 (41.6) | 2.65 (42.4) |
| Airflow ft³/min (L/s) | 0.0 (0.0) | 0.0 (0.0) | 0.0 (0.0) | 0.2 (0.1) | 0.2 (0.1) | 0.4 (0.2) | 0.5 (0.3) | 0.0 (0.0) | 0.0 (0.0) |
| IFD 25% 1b/50in² (N/323cm²) | 12.8 (56.8) | 14.4 (63.9) | 15.9 (70.6) | 17.0 (75.6) | 12.3 (54.6) | 10.6 (47.0) | 9.3 (41.5) | 14.1 (62.6) | 13.4 (59.6) |
| Return Val. @ 25% % | 85.5 | 84.7 | 83.6 | 82.5 | 81.7 | 75.5 | 64.1 | 85.1 | 84.6 |
| S.F. 65% / 25% | 1.8 | 1.9 | 1.9 | 2.0 | 1.9 | 2.0 | 2.2 | 1.9 | 2.1 |
| Tensile Strength psi (kPa) | 5 (33) | 6 (38) | 6 (42) | 7 (46) | 5 (37) | 5 (36) | 5 (35) | 5 (35) | 5 (35) |
| Elongation (%) | 135 | 136 | 132 | 127 | 146 | 142 | 123 | 139 | 122 |
| Tear Strength (20"/MIN-STDSP1) pli (N/m) | 0.6 (104) | 0.7 (115) | 0.7 (123) | 0.9 (153) | 0.7 (116) | 0.6 (107) | 0.7 (120) | 0.6 (99) | 0.5 (95) |
| 50% Compression Set % | 3.4 | 3.8 | 4.4 | 4.9 | 4.1 | 9.7 | 38.1 | 3.5 | 3.5 |
| 90% Compression Set % | 5.4 | 6.0 | 6.9 | 7.6 | 6.5 | 60.0 | 88.3 | 5.2 | 5.5 |
| HACS 75% % | 41.8 | 12.8 | 10.9 | 9.6 | 8.4 | 20.1 | 64.7 | 8.8 | 12.1 |
| Resilience % | 25 | 28 | 19 | 16 | 15 | 11 | 10 | 23 | 24 |

### Foam Examples 100-105

Flexible foams were produced using the formulations given in Table 10 (amounts are in parts by weight), in which POLYOL 1, POLYOL 3, PMPO 1, PMPO 2, CATALYST 1, CATALYST 2, and CATAYST 3 are all as described above. ANTIOXIDANT 1 refers to Iganox^{®} 5057, commercially available from BASF. In Foam Examples 100-105, the isocyanate used was a polymeric diphenylmethane diisocyanate having an NCO content of 32.0-33.5 wt%, available from Covestro as Mondur^{®} 3694. All the foams were produced, sampled, and tested in the manner described above with respect to Examples 1-20. Examples 100 and 104-105 are comparative examples and Examples 101-103 are inventive examples.

**Table 10**

| | Example | | | | | |
|---|---|---|---|---|---|---|
| Chemical | 100 | 101 | 102 | 103 | 104 | 105 |
| POLYOL 3 | 45 | 45 | 45 | 45 | 35 | 25 |
| PMPO 2 | 20 | 20 | 20 | 20 | 30 | 40 |
| POLYOL 1 | 35 | 25 | 15 | -- | 35 | 35 |
| PMPO 1 | -- | 10 | 20 | 35 | -- | -- |
| Water (distilled) | 2.32 | 2.32 | 2.32 | 2.32 | 2.32 | 2.32 |
| SURFACTANT 2 | 0.8 | 0.8 | 0.8 | 0.8 | 0.8 | 0.8 |
| ANTIOXIDANT 1 | 0.5 | 0.5 | 0.5 | 0.5 | 0.5 | 0.5 |
| CATALYST 2 | 0.15 | 0.15 | 0.15 | 0.15 | 0.15 | 0.15 |
| CATALYST 1 | 0.17 | 0.17 | 0.17 | 0.17 | 0.17 | 0.17 |
| CATALYST 3 | 0.03 | 0.03 | 0.03 | 0.03 | 0.03 | 0.03 |
| INDEX (100 A/B) | 102 | 102 | 102 | 102 | 102 | 102 |
| % poly(oxyethylene) content | 33.2 | 31.5 | 29.7 | 27.0 | 31.4 | 29.5 |
| % Solid Polymer Particles | 9.8 | 12.1 | 14.4 | 17.9 | 14.7 | 19.6 |

| Physical Properties | | | | | | |
|---|---|---|---|---|---|---|
| Density lb/ft³ (kg/m³) | 2.58 (41.2) | 2.50 (40.0) | 2.49 (39.8) | 2.47 (39.5) | 2.54 (40.7) | 2.51 (40.1) |
| Airflow ft³/min (L/s) | 5.4 (2.5) | 5.0 (2.4) | 4.4 (2.1) | 4.3 (2.0) | 5.0 (2.4) | 4.7 (2.2) |
| IFD 25% 1b/50in² (N/323cm²) | 10.3 (45.7) | 14.6 (65.1) | 17.4 (77.3) | 18.3 (81.5) | 10.7 (47.5) | 11.9 (52.8) |
| Return Val. @ 25% % | 81.4 | 79.6 | 76.0 | 69.0 | 78.3 | 75.4 |
| S.F. 65% / 25% | 2.4 | 2.4 | 2.4 | 2.9 | 2.5 | 2.6 |
| Tensile Strength psi (kPa) | 7 (49) | 12 (80) | 12 (79) | 11 (72) | 6 (40) | 4 (31) |
| Elongation (%) | 138 | 139 | 113.3 | 87.6 | 112.4 | 71.0 |
| Tear Strength (20"/MIN-STDSP1) pli (N/m) | 1.1 (197) | 1.1 (194) | 1.1 (188) | 0.8 (144) | 1.0 (167) | 0.7 (131) |
| 50% Compression Set % | 2.4 | 2.5 | 3.0 | 4.5 | 2.8 | 3.9 |
| 90% Compression Set % | 3.0 | 4.0 | 4.8 | 7.5 | 4.0 | 5.3 |
| HACS 75% % | 2.5 | 2.7 | 3.2 | 4.8 | 2.9 | 4.2 |
| Resilience % | 15 | 14 | 14 | 15 | 17 | 20 |
| Viscoelastic Recovery Time (sec) | 5 | 5 | 5 | 6 | 5 | 5 |

### Foam Examples 106-116

Flexible foams were produced using the formulations given in Table 11 (amounts are in parts by weight), in which POLYOL 1, POLYOL 3, PMPO 1, PMPO 2, CATALYST 1, CATALYST 2, CATAYST 3, and ANTIOXIDANT 1 are all as described above. ADDITIVE 1 refers to Niax^{™} processing additive DP-1022, commercially available from Momentive. In Foam Examples 106-116, the isocyanate used was a polymeric diphenylmethane diisocyanate having an NCO content of 32.0-33.5 wt%, available from Covestro as Mondur^{®} 3694. All the foams were produced, sampled, and tested in the manner described above with respect to Examples 1-20. Examples 106 and 111-116 are comparative examples and Examples 107-110 are inventive examples.

**Table 11**

| | Example | | | | | | | | | | |
|---|---|---|---|---|---|---|---|---|---|---|---|
| Chemical | 106 | 107 | 108 | 109 | 110 | 111 | 112 | 113 | 114 | 115 | 116 |
| POLYOL 3 | 45 | 45 | 45 | 45 | 35 | 45 | 45 | 45 | 35 | 25 | 15 |
| PMPO 2 | 20 | 20 | 20 | 20 | 20 | 30 | 40 | 50 | 30 | 40 | 50 |
| POLYOL 1 | 35 | 25 | 15 | -- | -- | 25 | 15 | 5 | 35 | 35 | 35 |
| PMPO 1 | -- | 10 | 20 | 35 | 45 | -- | -- | -- | -- | -- | -- |
| Water (distilled) | 1.42 | 1.42 | 1.42 | 1.42 | 1.42 | 1.42 | 1.42 | 1.42 | 1.42 | 1.42 | 1.42 |
| ADDITIVE 1 | 1.5 | 1.5 | 1.5 | 1.5 | 1.5 | 1.5 | 1.5 | 1.5 | 1.5 | 1.5 | 1.5 |
| SURFACTANT 2 | 0.5 | 0.5 | 0.5 | 0.5 | 0.5 | 0.5 | 0.5 | 0.5 | 0.5 | 0.5 | 0.5 |
| ANTIOXIDANT 1 | 0.5 | 0.5 | 0.5 | 0.5 | 0.5 | 0.5 | 0.5 | 0.5 | 0.5 | 0.5 | 0.5 |
| CATALYST 2 | 0.17 | 0.17 | 0.17 | 0.17 | 0.17 | 0.17 | 0.17 | 0.17 | 0.17 | 0.17 | 0.17 |
| CATALYST 1 | 0.17 | 0.17 | 0.17 | 0.17 | 0.17 | 0.17 | 0.17 | 0.17 | 0.17 | 0.17 | 0.17 |
| CATALYST 3 | 0.03 | 0.03 | 0.03 | 0.03 | 0.03 | 0.03 | 0.03 | 0.03 | 0.03 | 0.03 | 0.03 |
| INDEX (100 A/B) | 102 | 102 | 102 | 102 | 102 | 102 | 102 | 102 | 102 | 102 | 102 |
| % poly(oxyethylene) content | 33.2 | 31.5 | 29.7 | 27.0 | 30.5 | 26.1 | 19.0 | 11.9 | 31.4 | 29.5 | 27.7 |
| % Solid Polymer Particles | 9.8 | 12.1 | 14.4 | 17.9 | 20.2 | 14.7 | 19.6 | 24.5 | 14.7 | 19.6 | 24.5 |

| | Physical Properties | | | | | | | | | | |
|---|---|---|---|---|---|---|---|---|---|---|---|
| Density lb/ft³ (kg/m³) | 3.73 (59.7) | 3.74 (59.9) | 3.69 (59.0) | 3.66 (58.6) | 3.60 (57.7) | 3.72 (59.5) | 3.73 (59.7) | 3.67 (58.8) | 3.73 (59.7) | 3.74 (59.9) | 3.67 (58.7) |
| Airflow ft³/min (L/s) | 4.7 (2.2) | 4.3 (2.0) | 4.4 (2.1) | 4.3 (2.0) | 4.9 (2.3) | 3.9 (1.9) | 2.4 (1.1) | 1.0 (0.5) | 4.2 (2.0) | 4.2 (2.0) | 4.0 (1.9) |
| IFD 25% 1b/50in² (N/323cm²) | 9.5 (42.4) | 13.0 (57.9) | 14.1 (62.9) | 16.7 (74.1) | 18.4 (81.7) | 9.8 (43.8) | 16.4 (73.0) | 57.5 (255.7) | 10.2 (45.5) | 10.2 (45.3) | 11.1 (49.6) |
| Return Val. @ 25% % | 90.9 | 90.8 | 87.7 | 81.7 | 86.2 | 84.3 | 67.1 | 65.4 | 88.3 | 86.5 | 83.6 |
| S.F. 65% / 25% | 2.5 | 2.5 | 2.6 | 2.8 | 2.6 | 2.8 | 3.4 | 2.6 | 2.7 | 2.9 | 3.1 |
| Tensile Strength psi (kPa) | 7 (51) | 11 (79) | 12 (81) | 13 (87) | 13 (89) | 3 (21) | 5 (35) | 17 (120) | 6 (40) | 5 (36) | 4 (29) |
| Elongation (%) | 180 | 172 | 152 | 126 | 127 | 71 | 47 | 69 | 160 | 123 | 78 |
| Tear Strength (20"/MIN-STDSP1) pli (N/m) | 1.1 (190) | 1.0 (179) | 1.2 (205) | 1.2 (214) | 1.2 (212) | 0.6 (99) | 0.3 (44) | 1.1 (188) | 1.0 (183) | 0.8 (133) | 0.7 (129) |
| 50% Compression Set % | 0.0 | 0.0 | 0.2 | 0.4 | 0.5 | 0.1 | 1.8 | 4.8 | 0.0 | 0.1 | 0.2 |
| 90% Compression Set % | 1.5 | 0.9 | 1.0 | 1.2 | 1.2 | 1.0 | 2.5 | 8.0 | 0.7 | 1.1 | 1.2 |
| HACS 75% % | 0.8 | 0.5 | 0.6 | 0.7 | 1.1 | 1.0 | 2.6 | 6.1 | 0.8 | 1.7 | 1.0 |
| Resilience % | 7 | 7 | 6 | 7 | 7 | 8 | 19 | 18 | 8 | 10 | 11 |
| Viscoelastic Recovery Time (sec) | N/a | N/a | 4 | 6 | 5 | 5 | 17 | 7 | 4 | 4 | 5 |

### Foam Examples 117-123

Flexible foams were produced using the formulations in Table 12 (amounts are in parts by weight), in which POLYOL 1, POLYOL 3, PMPO 1, PMPO 2, CATALYST 1, CATALYST 2, CATAYST 3, and ANTIOXIDANT 1 are all as described above. CROSSLINKER 1 refers to Ortegol^{®} 204, commercially available from Evonik. In Foam Examples 117-123, the isocyanate used was an aromatic diisocyanate mixture of 80% 2,4 toluene diisocyanate and 20% 2,6 toluene diisocyanate, available from Covestro as Mondur^{®} TD 80. All foams were produced, sampled, and tested in the manner described above in Examples 1-20. Examples 119-121 are inventive examples and Examples 117-118 and 122-123 are comparative examples.

**Table 12**

| | Example | | | | | | |
|---|---|---|---|---|---|---|---|
| Chemical Name | 117 | 118 | 119 | 120 | 121 | 122 | 123 |
| POLYOL 3 | 74 | 74 | 74 | 64 | 54 | 64 | 54 |
| PMPO 2 | 18 | 18 | 18 | 18 | 18 | 28 | 38 |
| POLYOL 1 | 8 | 4 | -- | -- | -- | 8 | 8 |
| PMPO 1 | -- | 4 | 8 | 18 | 28 | -- | -- |
| Water (distilled) | 1.95 | 1.95 | 1.95 | 1.95 | 1.95 | 1.95 | 1.95 |
| CROSSLINKER 1 | 0.8 | 0.8 | 0.8 | 0.8 | 0.8 | 0.8 | 0.8 |
| SURFACTANT 2 | 1.25 | 1.25 | 1.25 | 1.25 | 1.25 | 1.25 | 1.25 |
| CATALYST 2 | 0.15 | 0.15 | 0.15 | 0.15 | 0.15 | 0.15 | 0.15 |
| CATALYST 1 | 0.32 | 0.32 | 0.32 | 0.32 | 0.32 | 0.32 | 0.32 |
| CATALYST 3 | 0.06 | 0.06 | 0.06 | 0.06 | 0.06 | 0.06 | 0.06 |
| INDEX (100 A/B) | 102 | 102 | 102 | 102 | 102 | 102 | 102 |
| % poly(oxyethylene) content | 19.4 | 18.7 | 18.0 | 21.5 | 24.9 | 17.5 | 15.7 |
| % Solid Polymer Particles | 8.8 | 9.8 | 10.8 | 13.3 | 15.8 | 13.7 | 18.6 |

| | Physical Properties | | | | | | |
|---|---|---|---|---|---|---|---|
| Density lb/ft³ (kg/m³) | 2.40 (38.4) | 2.39 (38.3) | 2.39 (38.3) | 2.51 (40.2) | 2.39 (38.3) | 2.45 (39.2) | 2.44 (39.0) |
| Airflow ft³/min (L/s) | 3.0 (1.4) | 2.7 (1.3) | 2.1 (1.0) | 3.6 (1.7) | 4.6 (2.2) | 2.0 (1.0) | 1.2 (0.6) |
| IFD 25% 1b/50in² (N/323cm²) | 10.4 (46.3) | 11.2 (49.6) | 10.5 (46.8) | 7.6 (33.8) | 11.6 (51.7) | 12.7 (56.4) | 15.4 (68.5) |
| Return Val. @ 25% % | 78.7 | 76.4 | 74.6 | 78.1 | 80.4 | 76.7 | 75.6 |
| S.F. 65% / 25% | 2.1 | 2.1 | 2.3 | 2.8 | 2.3 | 2.2 | 2.5 |
| Tensile Strength psi (kPa) | 9 (58) | 7 (51) | 7 (47) | 5 (34) | 12 (81) | 7 (51) | **10** (69) |
| Elongation (%) | 148 | 119 | 112 | 107 | 174 | 113 | 119 |
| Tear Strength (20"/MIN-STDSP1) pli (N/m) | 0.9 (155) | 0.8 (139) | 0.6 (106) | 0.5 (91) | 1.2 (212) | 0.6 (99) | 0.8 (139) |
| 50% Compression Set % | 3.5 | 4.1 | 4.8 | 6.2 | 3.5 | 4.9 | 6.8 |
| 90% Compression Set % | 5.9 | 6.3 | 7.2 | 8.9 | 5.7 | 7.9 | 12.2 |
| HACS 75% % | 5.9 | 6.3 | 7.4 | 10.5 | 6.1 | 7.8 | 11.0 |
| Resilience % | 14 | 13 | 13 | 20 | 20 | 18 | 22 |
| Viscoelastic recovery time (sec) | 6 | 6 | 7 | 8 | 5 | 6 | 8 |

### Foam Examples 124-130

Flexible foams were produced using the formulations given in Table 12 (amounts are in parts by weight), in which POLYOL 1, POLYOL 3, PMPO 1, PMPO 2, CATALYST 1, CATALYST 2, CATAYST 3, ANTIOXIDANT 1, and CROSSLINKER are all as described above. In Foam Examples 124-130, the isocyanate used was an aromatic diisocyanate mixture of 80% 2,4 toluene diisocyanate and 20% 2,6 toluene diisocyanate, available from Covestro as Mondur^{®} TD 80. All the foams were produced, sampled, and tested in the manner described above with respect to Examples 1-20. Examples 126-128 are inventive examples and Examples 124-125 and 129-130 are comparative examples.

**Table 13**

| | Example | | | | | | |
|---|---|---|---|---|---|---|---|
| Chemical Name | 124 | 125 | 126 | 127 | 128 | 129 | 130 |
| POLYOL 3 | 78 | 78 | 78 | 68 | 58 | 68 | 58 |
| PMPO 2 | 15 | 15 | 15 | 15 | 15 | 25 | 35 |
| POLYOL 1 | 7 | 3.5 | -- | -- | -- | 7 | 7 |
| PMPO 1 | -- | 3.5 | 7 | 17 | 27 | -- | -- |
| Water (distilled) | 1.1 | 1.1 | 1.1 | 1.1 | 1.1 | 1.1 | 1.1 |
| CROSSLINKER 1 | 0.6 | 0.6 | 0.6 | 0.6 | 0.6 | 0.6 | 0.6 |
| SURFACTANT 2 | 0.35 | 0.35 | 0.35 | 0.35 | 0.35 | 0.35 | 0.35 |
| CATALYST 2 | 0.12 | 0.12 | 0.12 | 0.12 | 0.12 | 0.12 | 0.12 |
| CATALYST 1 | 0.48 | 0.48 | 0.48 | 0.48 | 0.48 | 0.48 | 0.48 |
| CATALYST 3 | 0.02 | 0.02 | 0.02 | 0.02 | 0.02 | 0.02 | 0.02 |
| INDEX (100 A/B) | 102 | 102 | 102 | 102 | 102 | 102 | 102 |
| % poly(oxyethylene) content | 19.4 | 18.8 | 18.2 | 21.7 | 25.1 | 17.6 | 15.7 |
| % Solid Polymer Particles | 7.4 | 8.2 | 9.1 | 11.6 | 14.1 | 12.2 | 17.1 |
| | Physical Properties | | | | | | |
| Density lb/ft³ (kg/m³) | 3.83 (61.3) | 3.87 (62.0) | 3.79 (60.6) | 4.21 (67.4) | 3.79 (60.7) | 3.82 (61.2) | 3.80 (60.9) |
| Airflow ft³/min (L/s) | 3.6 (1.7) | 3.3 (1.6) | 2.9 (1.4) | 4.1 (1.9) | 5.0 (2.4) | 2.6 (1.2) | 1.7 (0.8) |
| IFD 25% 1b/50in² (N/323cm²) | 14.7 (65.4) | 15.4 (68.3) | 14.4 (64.2) | 9.2 (40.7) | 13.7 (60.8) | 18.5 (82.1) | 22.3 (99.4) |
| Return Val. @ 25% % | 90.3 | 89.3 | 88.3 | 86.6 | 88.0 | 88.9 | 88.0 |
| S.F. 65% / 25% | 2.3 | 2.3 | 2.4 | 3.6 | 2.7 | 2.3 | 2.3 |
| Tensile Strength psi (kPa) | 8 (55) | 5 (35) | 8 (56) | 3 (19) | 6 (42) | 8 (57) | 10 (72) |
| Elongation (%) | 149 | 103 | 136 | 70 | 106 | 128 | 129 |
| Tear Strength (20"/MIN-STDSP1) pli (N/m) | 0.9 (159) | 0.9 (150) | 0.8 (147) | 0.5 (80) | 1.0 (168) | 0.7 (118) | 0.9 (151) |
| 50% Compression Set % | 1.5 | 1.6 | 1.9 | 4.4 | 2.1 | 1.8 | 1.9 |
| 90% Compression Set % | 2.1 | 2.3 | 2.4 | 4.3 | 3.2 | 2.4 | 2.8 |
| HACS 75% % | 2.7 | 2.2 | 2.6 | 4.4 | 3.2 | 2.6 | 2.7 |
| Resilience % | 20 | 19 | 18 | 25 | 29 | 22 | 25 |
| Viscoelastic recovery time (sec) | 4 | 4 | 4 | 4 | 4 | 4 | 4 |

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification.

## Claims

1. A polyurethane foam-forming composition comprising:
(a) a polyisocyanate present in an amount sufficient to provide an isocyanate index of 70 to 130 wherein the isocyanate index is the molar ratio of isocyanate groups to hydroxyl groups present in the polyurethane foam-forming composition, multiplied by 100;
(b) a polyol composition having a weight average hydroxyl functionality of 2 to 4, a weight average OH number of 20 to 120 mg KOH/g polyol composition as determined according to ASTM D4274-16, and comprising a filled polyol, wherein the filled polyol comprises:
(i) solid polymer particles having an average particle size of no more than 1.5 microns, as determined by ASTM 9121-18; and
(ii) a carrier polyol comprising a polyether polyol P1 having a functionality of 2 to 6, an OH number of 20 to 120 mg KOH/g polyether polyol P1 as determined by ASTM D4274-16, and a poly(oxyethylene) content of at least 60% by weight, based on total weight of the polyether polyol P1, wherein the polyether polyol P1 is present in an amount of at least 50% by weight, based on total weight of carrier polyol;
(c) a blowing agent composition comprising water; and
(d) a catalyst,
wherein the filled polyol is present in an amount of at least 5% by weight, preferably in an amount of at least 10% by weight, based on total weight of polyol in the polyurethane foam-forming composition.

2. The polyurethane foam-forming composition of claim 1, wherein the polyol composition has a weight average OH number of 20 to 100 mg KOH/g polyol composition.

3. The polyurethane foam-forming composition of any one of claims 1 to 2, wherein the polyol composition has a poly(oxyethylene) content of at least 15% by weight or 40 to 60% by weight, based on total weight of polyols in the polyurethane foam-forming composition.

4. The polyurethane foam-forming composition of any one of claims 1 to 3, wherein the polyether polyol P1 has a functionality of 2 to 4, an OH number of 20 to 50 mg KOH/g polyether polyol P1 and a poly(oxyethylene) content of 60 to 90% by weight, based on total weight of the polyether polyol P1.

5. The polyurethane foam-forming composition of any one of claims 1 to 3, wherein the polyether polyol P1 is present in an amount of at least 70, preferably at least 90% by weight, based on total weight of the carrier polyol.

6. The polyurethane foam-forming composition of any one of claims 1 to 5, wherein the filled polyol comprises a polymer polyol comprising a reaction product of a reaction mixture comprising: (a) the carrier polyol; (b) an ethylenically unsaturated monomer, (c) a preformed stabilizer; (d) a free radical initiator, and optionally (e) a polymer control agent.

7. The polyurethane foam-forming composition of claim 6, wherein the ethylenically unsaturated monomer comprises styrene and acrylonitrile present in a weight ratio of styrene to acrylonitrile of 60:40 to 40:60.

8. The polyurethane foam-forming composition of any one of claims 1 to 7, wherein the solid polymer particles exhibit a multimodal particle size distribution.

9. The polyurethane foam-forming composition of any one of claims 1 to 8, wherein the solid polymer particles are present in an amount of 1 to 20% by weight, based on total weight of polyol in the polyurethane foam-forming composition.

10. The polyurethane foam-forming composition of any one of claims 1 to 9, wherein the polyol composition further comprises a polyether polyol P2 having a functionality of greater than 2, a poly(oxyethylene) content of 0 to 50 % by weight, and an OH number of 8 to 112 mg KOH/g polyether polyol P2, which polyether polyol P2 is present in an amount of 1 to 50% by weight, based on total weight of polyol in the polyurethane foam-forming composition.

11. The polyurethane foam-forming composition of any one of claims 1 to 10, wherein the polyol composition further comprises a polyether polyol P3 with a functionality of 2 to 6, an poly(oxyethylene) content of at least 60% by weight, at least 50 mol % of primary OH groups, and a hydroxyl number of 10 to 112 mg KOH/g polyether polyol P3, wherein polyether polyol P3 is present in an amount of 10 to 90% by weight, based on total weight of polyol in the polyurethane foam-forming composition.

12. The polyurethane foam-forming composition of any one of claims 1 to 11, wherein the polyurethane foam-forming composition comprises no more than 10% by weight, based on total weight of the polyol composition, of a polyol P4 having an OH number greater than 120 mg KOH/g polyol P4.

13. The polyurethane foam-forming composition of any one of claims 1 to 12, wherein the polyurethane foam-forming composition is substantially free of physical blowing agent.

14. A polyurethane foam produced from the polyurethane foam-forming composition of any one of claims 1 to 13.
